# EUROPEAN PATENT SPECIFICATION

(11) **EP 2 767 924 B1**
(45) Date of publication and mention of the grant of the patent: **01.05.2019**
(21) Application number: 13166212.4
(22) Date of filing: 02.05.2013
(51) Int. Cl.: G06K 9/20, G06K 9/00

(54) **A method and device for recognising pulsing light sources**
Verfahren und Vorrichtung zur Erkennung pulsierender Lichtquellen
Procédé et dispositif pour reconnaître des sources de lumière à impulsions

(30) Priority: 15.02.2013 US 201313768443
(43) Date of publication of application: 20.08.2014
(73) Proprietor: HELLA GmbH & Co. KGaA, 59552 Lippstadt (DE)
(72) Inventor: Siecke, Jona, 10437 Berlin (DE); Hoffmann, Ingo, 13089 Berlin (DE); Debski, Andreas, 13189 Berlin (DE); Stefanovic, Marko, 13086 Berlin (DE); Mohr, Marcel, 10243 Berlin (DE); Lorenz, Tara, 10243 Berlin (DE)
(74) Representative: Pfenning, Meinig & Partner mbB

(56) References cited:
- WO-A1-2005/076037
- WO-A1-2010/084493
- WO-A2-2012/019700
- DE-A1-102011 077 038
- US-A1- 2005 269 481

## Description

The invention relates to a method and to a device for recognising pulsing light sources.

Methods and devices for recognising light sources are known from various fields of technology. For example, a multitude of different methods from vehicle technology for recognising, classifying and tracing vehicle lights are described in the document DE 10 2008 025 457 A1. These can be combined with driver assistance systems, for example for the control of a lighting system or a braking system of a vehicle, in dependence on a recognised traffic situation. Further examples are described in US 2005/0269481 A1 and in WO 2005/076037 A1. Document WO 2012/017900 A2 describes a method for detecting light sources including the features of the preamble of claim 1.

It is known, for recognising light sources, in particular light sources on vehicles, for a sequence of individual images to be acquired with a camera, and for gray values of picture points of the individual images to be measured with a light-sensitive sensor of the camera. The term gray value of a picture point, as used in the present context, refers generally to a quantity which is a measure of the intensity of at least of a fraction of the light incident on the sensor. In general, a light-sensitive sensor is sensitive only to a certain fraction of the electromagnetic spectrum (comprising infrared, visible light, ultraviolet, etc.). Typically, the gray value is considered as a measure of the intensity of that fraction of light to which the sensor is sensitive. However, it is also possible that the gray value is defined such that it is a measure of the intensity of only a part of that fraction of light to which the sensor is sensitive. To detect a light source, the sensor must be sufficiently sensitive to the light emitted by the light source and the gray value is defined such that it is a measure of the intensity of a fraction the electromagnetic spectrum which comprises the light emitted by the light source. In an evaluation unit, usually at least a part of the picture points of each individual image on account of their gray values is combined or grouped together into coherent image regions of uniform gray values. These image regions are subsequently examined with regard to one or more predefined features such as for example an absolute or relative brightness, the shape or position of each such image region within the individual image. As described in DE 10 2008 025 457 A1, one can also envisage tracking such an image region over several consecutive individual images and for example examining a temporal change of the gray values of this image region, or a movement of the image region, as predefined features. A given image region which is defined accordingly and has predefined features is finally classified as a light source.

However, it has been found to be extremely difficult, to recognise, track and classify pulsing light sources with such a method. Pulsing light sources such as a LED headlights on vehicles for example and which are operated with a pulse operation, cannot be represented as a clear, well defined image with the sensor of the camera in this manner, but only as differently shaped, non-coherent patterns which change and pulsate over time. This is particularly the case if a pulse frequency (repetition rate) is roughly as large as or larger than the read-out rate of the sensor. Repetition rates of between 50 Hz to 1000 Hz are particularly problematic. Often only very instable image regions in the individual images acquired by the camera arise due to such light sources, and these image regions are very difficult to recognise, track and classify.

This is particularly problematic due to the fact that modern vehicles to an increasing extent are designed with LED headlights (front headlight, rear lights, brake lights, indicators). Often, the repetition rates of the LEDs of these headlights are envisaged to change, for example to dim a headlight, for reducing the energy consumption, or for changing between two different operating modes of such a headlight (brake light mode and dimming mode of an LED rear light). One can also envisage for this purpose, a duty cycle of the LED or of the LEDS of a headlight being changed instead of the repetition rate (impulse rate) or additionally to the repetition rate, by way of impulse duration of the LED or LEDs also being adapted.

Many camera-based driver assistance systems are however often based on recognition of other vehicles by way of the recognition of their headlights, rear lights, and brake lights. A secure functioning of such driver assistance systems thus assumes a reliable recognition of LED headlights of vehicles.

Accordingly, it is the object of the present invention, to suggest a method as well as a device which overcome or at least mitigate the disadvantages of the state of the art. The method and the device are thus to permit pulsing light sources, such as LED headlights operated in pulse operation, to be recognised with a higher reliability and higher accuracy. Moreover, a vehicle with a driver assistance system is to be suggested, which can also recognise pulsing light sources, such as an LED headlight operated with a pulse operation, with a higher reliability and a higher accuracy.

According to the invention, this object is achieved by a method according to claim 1 and by a device according to claim 9. Further developments and advantageous embodiments are defined in the dependent claims and described below. The object is also achieved by a vehicle according to claim 12.

Accordingly, with regard to the method according to the invention, one envisages a sequence of one or more individual images being acquired with a camera and gray values of picture points of the individual images being measured with a light-sensitive sensor of the camera.

For a better understanding, some specific sensor types which are suitable for at least some embodiments of the present invention are explained in the following sections. The sensor comprises an array of photodetectors. The gray values of the picture points of the individual images are measured by means of said photodetectors of the sensor. There may by a one-to-one correspondence between the picture points and the photodetectors or a one-to-many correspondence between the picture points and the photodetectors. In the first case, the gray value of any one of the picture points is determined from charge levels (which are described in more detail below) of exactly one of the photodetectors. In the second case, the gray value of any one of the picture points is determined from charge levels of several of the photodetectors. The many-to-one correspondence may be accomplished be means of a micro-lens system, as generally known in the art as split-pixel design.

In order to measure the gray value of any of the picture points of any of the individual images, the one or more photodetectors corresponding to the picture point is illuminated during at least two (i.e. two or more) integration (time) intervals of that picture point of that individual image. It is understood that the sensor works periodically, i.e., for each individual image the gray values of all picture points of the individual image are measured. In particular, the at least two integration intervals (i = 1, 2...) are repeated for each individual image.

As known in the art, the charge level of any of the photodetectors of the sensor changes during an integration interval of that photodetector in response to an illumination of the photodetector during any of the integration intervals, typically due to a flow of a photocurrent depending on the intensity of the illumination. For any of the photodetectors at the end of any of the integration intervals of that photodetector, the charge level is a measurable quantity indicative of the amount of illumination incident on the photodetector during the integration interval. Typically the charge level depends on (and is in principle derivable from) the amount of electrical charge transported as photocurrent during integration. Further examples of possible measurable quantities from which the charge level may be derived or be based on are given below.

For the method as well as for the device according to the invention, it is necessary that for each individual image and for each of the picture points of the individual image, i.e. for each of the picture points of each of the individual images, the gray value of the picture point depends on two or more charge levels (denoted as cᵢ, i = 1, 2, ...) of the at least one photodetector corresponding to the picture point, wherein the at least two charge levels are the charge levels at the respective ends (denoted as tᵢ, i = 1, 2, ...) of at least two integration intervals (i = 1, 2...) for the picture point. The at least two integration intervals for said picture point have different lengths. Typically, the value of any of those at least two charge levels depends only on the amount of illumination incident (and integrated) during the corresponding integration interval, i.e. the entire quantity of intensity or brightness, that affects the at least one photodetector during the whole integration interval, for any of those at least two integration intervals. According to the present invention, the gray value of the picture point is defined as the sum of the two or more charge levels each weighted with a corresponding weighting factor or corresponds to the charge level of the photodetector at the end of the longest of the at least two integration intervals for which the at least one photodetector is not saturated.

The use of at least two integration intervals for each picture point of each individual image is known in the art, for example, in connection with so-called high dynamic range (HDR) sensors, such as so-called multi-readout sensors, split-pixels sensors, and well-capacity-adjustment (WCA) sensors. These generally known sensor designs, see for example "CMOS image sensors", by El Gamal, A. et al., published in: Circuits and Devices Magazine, IEEE, May-June 2005, Volume: 21, Issue: 3 Page(s): 6 - 20. Furthermore, see "A 256 × 256 CMOS imaging array with wide dynamic range pixels and column parallel digital output,", by S. J. Decker et al., published in IEEE J. Solid-State Circuits, vol. 33, pp. 2081-2091, Dec. 1998. Moreover, see "A 640X512 CMOS image sensor with ultrawide dynamic range floating-point pixel-level ADC", by D. Yang, A et al., published in IEEE J. Solid-State Circuits, vol.34, pp. 1821-1834, Dec. 1999. These documents are incorporated herein by reference. Possible sensor types that calculate the charge levels considering the time to saturation or other parameters only measurable within (but not measurable at the ends of) the integration intervals may be excluded.

In the next step, the gray values that are measured with a light sensitive sensor are transmitted to an evaluation unit. In the evaluation unit, all or at least a part of the picture points of each individual image may be combined, on account of their gray values, into image regions. These image regions may be defined as coherent image regions. Furthermore, the image regions may be defined as image regions of uniform gray values.

Subsequently, all or some of the picture points and/or, if previously formed in the evaluation unit, all or some of said image regions are examined in the evaluation unit with regard to one or more predefined features. A given picture point or image region is classified as a (pulsing) light source or as part of a (pulsing) light source (i.e. identified as corresponding to such a light source in the sense that the light source or a part of it is imaged by or projected onto the respective pixel or picture point) depending on whether it displays one, some or all of these features. Details of the examination process are provided further below.

Furthermore, to describe the invention in further detail, in the following, the value of the charge level of the photodetector at the beginning of any integration interval is denoted as zero value of the photodetector for that integration interval (denoted as cᵢ⁰, with i = 1, 2, ... being the index of the integration interval considered), i.e. the integration of the photodetector starts at the respective zero value of the charge level of the photodetector. Thus, the value of the charge level at the end of any of the integration intervals being identical (or very close to or up to small deviations, for example, due to dark currents in the photodetectors) the corresponding zero value indicates that the photodetector was not illuminated during the integration interval (or that the illumination was below a minimum amount of illumination detectable by the photodetector). Furthermore, a saturation value (denoted as cᵢ^{sat}, i = 1, 2, ...) of the charge level at the end of any of the integration intervals indicates the respective photodetector saturated during the integration interval, wherein the photodetector is called saturated if any further illumination during the integration interval does not (or would not) change the charge level any further. Typically, said saturation value is the same for each integration interval, picture point and individual image.

It has been found that a repetitive occurrence of picture points with gray values identical with (or close to) a relatively small set of characteristic gray values can be observed when using sensors of the type generally described above, in particular when using sensors with HDR, in particular CMOS sensors with HDR, for acquiring images of pulsing light sources.

According to the present invention, the definition of the predefined gray values is such that the predefined gray values are identical or at least close to said characteristic gray values of the sensor which typically occur in connection with pulsing light sources. It should be noted that the predefined gray values are not a measure of an actual mean intensity or an actual mean brightness of the pulsing light source, but are correlated with the respective zero values and saturation values of the photodetectors of the sensor. These characteristic values therefore can be considered as artefacts of the sensor caused by pulsing light sources.

The method according to the invention utilises the fact that a pulsing light source which is captured with the camera and which irradiates an adequately strongly pulsing light power, typically saturates the photodetectors in the picture points or image regions corresponding to or assigned to the light source if any of the light pulses illuminates the photodetector during any of the integration intervals for any of the picture points. Since at least two integration intervals are used for each of the picture points of any of the individual images, it occurs that in one or more of the at least two integration intervals the photodetector is illuminated by the light pulses, thereby saturating the respective photodetector, and that, for the same picture point, in the remaining one or more other integration intervals for that picture point, the photodetector is not illuminated by the light pulses, such that the charge level of the photodetector changes not at all during these integration intervals or changes only relatively little (in comparison to the integration interval which is illuminated with the light pulse). The picture point then receives a value identical or in a vicinity of one of the at least one predefined gray values.

A picture point having a gray value in a defined vicinity of the at least one predefined gray value, or an image region, whose picture points comprise gray values in a defined vicinity of the at least one predefined gray value is a strong indication for an illumination with light pulses emitted by a pulsing light source the brightness of which changing greatly within a very short time. This in particular represents the indication of a LED, since LED light sources are characterised by particularly short response behaviour.

The examination with regard to the at least one predefined feature thus comprises an examination of the picture points as to whether the picture points have gray values in a defined vicinity of one of at least one predefined gray value. In case that the picture points are grouped in image regions, as described above, the examination with regard to the at least one predefined feature may comprise an examination of the image regions as to whether the picture points of these image regions comprise gray values in a defined vicinity of one of at least one predefined gray value. The at least one predefined gray value is defined as the gray value that any (or each) of the picture points attains (or would have) if the charge levels of the at least one photodetector corresponding to the picture point at the ends of the at least two integration intervals for the picture point have (or had) either the corresponding zero value or the corresponding saturation value. "At least one predefined gray value" means "one or more than one predefined gray value". According to the invention, at least one of the predefined gray values is defined as the gray value any of the picture points attains if at least one of the charge levels of the at least one photodetector corresponding to the picture point has, at the end of the respective integration interval (i), the corresponding zero value (cᵢ⁰) and at least one further of the charge levels of the at least one photodetector corresponding to the picture point has, at the end of the respective integration interval (j ≠ i), the corresponding saturation value (cⱼ^{sat}).

For example, it may be envisaged that the image regions are formed only from picture points having gray values in a defined vicinity of one of at least one predefined gray value.

The defined vicinity of any predefined gray value may be defined as an interval of gray values, the interval being characterized by a width of the interval and, at least in some embodiments, may be further characterized by an off-set, i.e. by a shift, of the interval with respect to the respective predefined gray value. The defined vicinities can be used to account for various factors affecting the measured gray values, such as signal noise and the brightness of the environment surrounding of the light source to be detected.

In practice, all signals produced with a sensor are, at least to some extend, afflicted with signal noise, i.e. include some noise-induced error. Generally, there are several sources for noise within the sensor depending on the sensor's architecture, one example being the sensor's read-out-circuitry. As a result, the gray values measured with the sensor may also include noise-induced errors. Also the brightness of the environment surrounding a light source may have an effect on the gray values of picture points corresponding to that light source, for example by shifting these gray values away from the predefined gray values, typically towards greater gray values. The reason for such a shift is that the predefined gray values are defined assuming that that the charge levels at the ends of the at least two integration intervals for a given picture point corresponding to a pulsing light source are either zero values or saturation values. If a photodetector is illuminated not only with light pulses emitted by the pulsing light source (to be detected), but also with light originating from the environment surrounding the light source, then in those integration intervals, in which no light pulses of the pulsing light source impinge on the photodetector, the light of the environment still does illuminate the photodetector and thus changes the charge level of the photodetector for those integration intervals. This additional illumination in those integration intervals causes the resulting gray value being shifted away from the corresponding predefined gray value (to larger values). For applications in relatively bright environments, the vicinities may be defined to be located above the respective predefined gray values, as discussed below.

In many cases it is not possible to determine the effect of the noise and the effect of the brightness of the environment on the gray values exactly for each picture point of each individual image. However, it is possible to make predictions on the resulting gray values. The predictions can be used to define the width and/or the off-set of the defined vicinity of any predefined gray value.

The defined vicinities can, for example, be defined sufficiently large to make sure that the gray values of all picture points corresponding to a pulsing light source, or alternatively of at least 50% of those picture points, are contained in the defined vicinities. Preferably, the widths of the defined vicinities are defined not greater than necessary to achieve this.

One method to get a prediction is by doing some measurements. The defined gray values and/or the widths and/or the off-sets of the defined vicinities may be determined empirically or experimentally. The experiments may be done by performing a series of measurements of the gray values of the picture points of the light source, wherein during these measurements the light source preferably does not emit light actively. To consider the influence of variable lighting conditions, the brightness of the test scene may be varied in such a manner it would be expected within the application. In this way, a spectrum of gray values is obtained including a maximum gray value Bₘᵢₙ and a minimum gray value Bₘₐₓ. For example, the widths and/or the off-sets of the first vicinitiy may be determined depending on (e.g. as a function of) the values Bₘᵢₙ Bₘₐₓ or on a mean value and/or a standard deviation of the spectrum of gray values. Typically the measurements are made with the same sensor type as used for the actual detection of the light sources. The boundaries of the vicinities for each of the predefined gray values can be calculated on the basis of these measurements, e.g. on the basis of Bₘᵢₙ and Bₘₐₓ. Such calculation may be made using the gray value function (P) introduced below.

If it is possible to estimate the effects on the measured gray values, the expected error of the estimations of the effects on the measured gray values then increases the widths of the vicinities. The expected error and thus the widths of the vicinities can be minimized using knowledge about the sensor noise and the environment of the light sources to be detected. This knowledge may concern one or more defined sets of picture points and/or individual images as described below. In particular, these sets may comprise all picture points and/or all individual images.

In practice, it may occur that a gray value of a picture point is found to lie in the defined vicinity of one of at least one predefined gray value although that picture point does not correspond to a (pulsing) light source but to some other object different from a (pulsing) light source. The measured gray value represents a measure of an actual mean intensity or an actual mean brightness of that object in the scene. Classifying this picture point as belonging to a (pulsing) light source would thus be a false positive detection of a (pulsing) light source.

Advantageously, adjusting the widths and the off-sets of the vicinities of the predefined gray values may be used as one possibility to minimize the risk of false positive detections of light sources. Alternatively or additionally, it is possible to reduce these risks by examining the picture points or regions with respect to additional features. Both possibilities are explained in detail in the following sections.

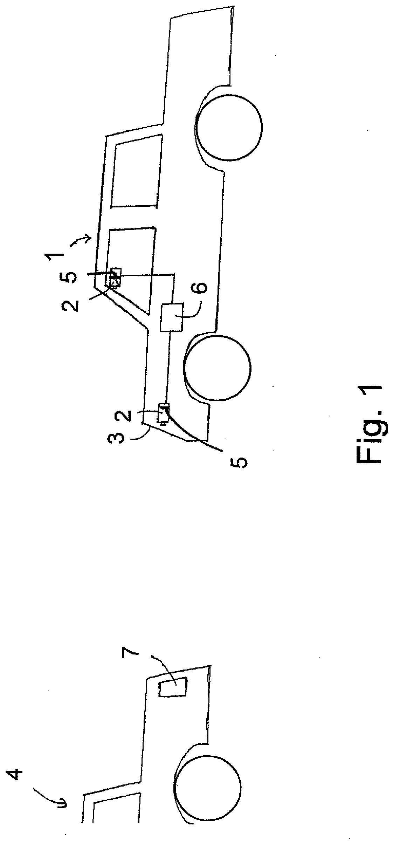

For example, it may be envisaged that said picture point or region is classified as a (pulsing) light source or as part of a (pulsing) light source only if it displays some, one or all the predefined features. The features proposed herein may be examined in addition to features already known in the art in order to increase the accuracy and reliability of recognizing pulsing light sources and/or to classify the type of the light source. Furthermore, it may be envisaged that one, some or all of said features are considered necessary for a picture point or region to be classified as a (pulsing) light source, or as a part of a (pulsing) light source and/or for classifying the light source as a specific type of light source; one, some or all of said features may be considered sufficient for a picture point or a region to be classified as a (pulsing) light source or as part of a (pulsing) light source and/or for classifying the light source as a specific type of light source. It is also possible that one, some or all of said features are considered as an indicator or evidence that a picture point or region corresponds to a (pulsing) light source or to a part of a (pulsing) light source and/or for classifying the light source as a specific type of light source. As indicated by the insertion of "(pulsing)" in the sentences above (and also further below), the light source may be classified as a light source, with or without further classifying it as pulsing or not pulsing. In particular one, some or all of the said features may be used to classify the kind of the light source or to derive or adopt further attributes for a classification. For example, a classification may be used for a driver assistance system proposed and described further below, for example with the driver assistance system shown in Figure 1. In such a system it is in particular important to distinguish headlights and rear lights from other light sources. This may be done for example concerning an absolute or relative brightness, the shape or position of each such image region within the individual image followed by a tracking algorithm. These attributes are as described distorted for pulsing light sources, so that a classification may often fail. With the use of one, some or all of the proposed features as further classification features or with a correction of attributes like brightness, shape, position or tracking, a correct classification of the a light source as headlights / rear lights or as lights from other light sources is possible.

Some of the features may be defined, as some of the examples given below, on the level of regions of picture points and may be not applicable on the level of individual picture points.

It may be envisaged that said regions are formed only of those picture points which display one, some or all of the predefined features, such as any of the predefined features discussed below. It may further be envisaged, that these regions are then examined in the evaluation unit with regard to one or more (further) predefined features.

In applications which allow controlling the brightness of the environment surrounding the light sources to be detected, it is possible to control the brightness in a way that the gray values of picture points corresponding to other objects (different from the (pulsing) sources to be detected), lie outside the defined vicinities of the predefined gray values. Typically, setting the brightness of the environment to low values is preferable. In applications which allow controlling the reflectivity of an (outer) surface of the pulsing light sources to be detected (e.g. by choosing materials for (outer) surfaces of the light source with low reflectivity), it is also possible to adjust the reflectivity such that reflections of environmental light impinging on said surface are suppressed or reduced.

In embodiments with more than one of said predefined gray values, e.g. denoted as gₖ with k = 1, 2, 3, ..., there are typically more than one defined vicinities. To reduce the widths of at least some of the vicinities, it is beneficial to optimise them separately. The defined vicinities can be defined individually for the different predefined gray values. In particular, the defined vicinities of different predefined gray values may have different widths and/or different off-sets. The vicinities may be written as an interval of the form [Δ⁻ₖ, Δ⁺ₖ] for k = 1, 2, 3, ..., with Δ⁻ₖ < Δ⁺ₖ and Δ⁻ₖ, Δ⁺ₖ being gray values at the endpoints of these intervals. Typically, exactly one vicinity is defined for each of the predefined gray values. Alternatively, it is possible to define more than one vicinity for each predefined gray value. The defined vicinities typically do not overlap each other but are separated from each other. Typically, at least two, preferably at least three, of the defined vicinities are separated from each other and from any other of the defined vicinities. In other words, the defined vicinities may and should be defined such that they comprise at least two, preferably at least three, different vicinities which do not overlap with each other or with any other of the defined vicinities. However, it is not excluded that some of the vicinities do overlap. Typically, one, more than one or all of the predefined gray values gₖ are contained in the defined vicinities, such that, in case of a one-to-one correspondence, for instance, one has Δ⁻ₖ < gₖ < Δ⁺ₖ. This is typically the case when the pulsing light sources to be detected are located in relatively dark environments, for example during night, twilight, or dawn, see below. Each of the predefined gray values may lie roughly centrally in its defined vicinity. In some applications, however, one or more than one or all of the predefined gray values may be outside the respective defined vicinities, typically below the corresponding vicinities, such that gₖ< Δ⁻ₖ < Δ⁺ₖ. This may be the case, for instance, when the pulsing light sources to be detected are located in relatively bright environments, for example by daylight, see below. When taking into account the environmental brightness for defining the vicinities of the predefined gray values, the defined vicinities of relatively large predefined gray values are typically affected less than the defined vicinities of relatively small predefined gray values. Often this is due to the decreased sensitivity of the sensor at strong illumination values.

Furthermore the vicinity may be defined specificly for each sensor. Preferably, during the production of the classification system, a defined set of measurements is performed for each sensor. These measurements could then be used to optimize the widths and the offsets of the vicinities individually for each sensor. Typically, this could be done by adding at least one value to the endpoints Δ⁻ₖ, Δ⁺ₖ of each interval and/or offset. Alternatively, it is possible to choose predefined sets of vicinities for defined measurement results. Another method is to set at least one parameter depending on the measurement results that is used to calculate the vicinities within the application.

It is possible to define the values of the widths of the defined vicinities depending on actual environmental conditions, such as the brightness of the environment surrounding the light source to be detected. The widths may thus be adjusted or optimized whenever a change of actual environmental conditions is detected, for example on the basis of the gray values measured with the senor, for example on the basis of a histogram or a mean value of these gray values, by means of a further brightness sensor of the proposed vehicle or in response to receiving a switching signal (e.g. an on/off signal) or a signal representing the switching status of the lighting system of the proposed vehicle. It may be envisaged that two or more sets (e.g. denoted as S₁, S₂, S₃,...) of defined vicinities of the predefined gray values are defined, wherein each of these sets (say Sᵢ) of defined vicinities corresponds to one of two or more predefined environmental conditions, such as "night", "twilight", "dawn", "day" etc., i.e. the vicinities of each set (Sᵢ) are optimized specifically for the respective environmental condition. For industrial imaging applications, for example, a set of defined vicinities may be optimized for specific predefined settings.

Another example may be a set corresponding to each kind of local environment of the light source, such as a part of a vehicle (autobody, coachwork) or a part of a traffic sign, of a construction or of a building, such as a bridge, which carries the light source.

In principle, it may be sufficient to consider only a subset of all predefined gray values that are possible for a given sensor type. This assumes that the selected predefined gray values occur frequently enough to ensure the acquired recognition quality. This will be discussed further below. Advantageously, exactly those predefined gray values are used which can be identified most easily or most precisely and which are most significant for the classification of a picture point as corresponding to a pulsing light source. Typically, the gray value corresponding to all charge levels being the corresponding zero values is not used as predefined gray value. This gray value generally corresponds to the darkest possible gray value. It may also be envisaged that the gray value corresponding to all charge levels being the corresponding saturation values is not used as predefined gray values. This gray value generally corresponds to the lightest possible gray value. According to the invention, at least one of the predefined gray values is defined as the gray value that any of the picture points attains if at least one of the charge levels of the at least one photodetector corresponding to the picture point has, at the ends of the at least two integration intervals, the corresponding zero value and at least one of the charge levels of the at least one photodetector corresponding to the picture point has, at the ends of the at least two integration intervals, the corresponding saturation value.

In some applications it sufficient to consider only "high" predefined gray values, i.e. those which are above a threshold value. Predefined gray values which are high (i.e. "bright") generally increase the significance of the features based on the predefined gray values described herein, particularly for detecting pulsing light sources in bright environments. In those cases, in which many of the measured gray values are close or even above the highest (i.e. "brightest") of the predefined gray values (e.g. in very bright environments), on the other hand, it may be envisaged to examine the picture points and/or the regions with respect to more than one feature, e.g. any of the features described herein and/or features already known in the art.

It further may be envisaged, that for any given individual image only those picture points are examined regarding the predefined features which have gray values above a preset cut-off value. Such a cut-off may help to reduce the number of picture points to be examined. It further may be envisaged, that the cut-off value is chosen such that at least one of the predefined gray values lies above this cut-off value. The accuracy and reliability of the described feature based on the predefined gray values is higher the more predefined gray values lie above the cut-off value. It may also be envisaged that, in addition to those picture points having gray values above the cut-off, also those picture points having gray values in within the defined vicinity of the at least one predefined gray values are examined with regard to (further) predefined features.

Generally, the widths of the defined vicinities may be defined to be sufficiently large to ensure that the gray values of picture points corresponding to pulsing sources are always contained in one of these vicinities. In principle, after having determined the vicinities as described above, it is possible to subsequently reduce the widths of the vicinities in order to reduce the risk of false positive detections. However, reducing the widths of the defined vicinities in most cases increases the risk of false negative detections of (pulsing) light sources.

The width of the defined vicinities may be optimized in a way that the risk of false positive and/or the risk false negative detections of (pulsing) light sources is/are minimized or balanced. For example, the risk of a false positive detection of a pulsing light source is small if there is only a small probability that a picture point has a gray value within the defined vicinity of one of the at least one predefined gray value although this pictures point actually does not correspond to a pulsing light source.

The widths of the defined vicinities of the predefined gray values may thus be determined applying an optimization procedure that balances and/or minimizes the risk of false positive and false negative detections of (pulsing) light sources. The optimization procedure may start with maximum values of the widths of each of the vicinities of the predefined gray values and subsequently reduce the widths of the vicinities to minimize false positive detections of (pulsing) light sources. This reduction may be continued, for instance, until the risk of false negative detections of (pulsing) light sources is greater than a threshold value and/or until the risk of false positive detections of (pulsing) light sources is less than a threshold value. Alternatively, the optimization procedure may start with minimum values of the widths and subsequently increase the widths to reduce the risk of false negative detections of pulsing light sources, until the risk of false negative detections of (pulsing) light sources is less than a threshold value and/or until the risk of false positive detections of (pulsing) light sources becomes greater smaller than a threshold value. These threshold values typically depend on the requirements for a specific application. The optimal widths of the defined vicinities and their concrete definition may depend on the specific application and/or on the sensor used.

When examining individual images that directly follow each other within the sequence of individual images, the gray values of picture points corresponding to a pulsing light source may jump from one defined vicinity to another defined vicinity. One possible reason for such jumps is that a phasing (i.e. a phase shift) between the light pulses emitted by the pulsing light source and the at least two integration intervals of the picture points changes over time in such a way that, for these picture points, the corresponding photodetectors saturate during different integration intervals (of the at least two integration intervals), respectively. It is thus possible to examine the gray values of picture points with respect to such jumps (i.e. these jumps are considered as one of "the at least one predefined feature") and classify a picture point or an image region as corresponding to a pulsing light source depending on the result of this examination. It should be noted that this can be done even if the defined vicinities of the predefined gray values are not known. Thus, a possible method for recognising a pulsing light source may comprise acquiring a sequence of several individual images with a camera and measuring gray values of picture points of the individual images with a light sensitive sensor of the camera, wherein the sensor comprises an array of photodetectors, wherein for each of the picture points of each of the individual images the gray value of the picture point depends on two or more charge levels of at least one of the photodetectors corresponding to the picture point at the ends of at least two integration intervals, wherein the at least two integration intervals have different lengths, wherein the charge level of any of the photodetectors at the end of any of the respective integration intervals is indicative of the amount of illumination incident on the photodetector during the integration interval, wherein the method further comprises identifying some of the picture points - or coherent image regions formed by some of the picture points - as corresponding to a pulsing light source by examining whether the picture points assume, in subsequent individual images or in a region of at least one of the individual images, gray values lying in different disjoint intervals, the intervals being smaller than a gap between these intervals, such that the gray values of these picture points jump between said intervals of gray values, and identifying those picture points as corresponding to a pulsing light source or to a part of a pulsing light source for which the gray values of subsequent individual images show such jumps. This embodiment may comprise means for segmentation and/or tracking to allocate corresponding picture points or regions in more than one individual image. In particular, the method for recognising a pulsing light source claimed with the present application may comprise examining whether the picture points having gray values within said defined vicinities assume, in subsequent individual images, gray values lying in different of the defined vicinities, such that the gray values of these picture points jump between the defined vicinities of different predefined gray values, and identifying the picture points as corresponding to a pulsing light source depending on whether they show such jumps or not. Correspondingly, the evaluation unit of the device may be configured to do this kind of examination.

More generally, the method may comprises examining whether the picture points having gray values within any of said defined vicinities show any particular further feature and identifying the picture points as corresponding to a pulsing light source depending on the result of this examination. The vicinities may be defined such that examining the "candidats" amongst the picture points on whether one further feature is shown is sufficient to decide whether the respective picture point really corresponds to a pulsing light source or not.

Furthermore, a sensitivity of the photodetectors of the sensor (or, equivalently, the intensity of the light pulses) may be such that if any one of the photodetectors is illuminated with one of the light pulses during one of the integration intervals, the photodetector saturates during the illumination with the light pulse and the charge level of the photodetector at the end of the respective integration interval has the corresponding saturation value, i.e., cᵢ = cᵢ^{sat} with i being the index of the integration interval. Preferably (or ideally), the sensitivity of the photodetectors (or, equivalently, the intensity of the light pulses) is such that any of the photodetectors saturates (instantly) as any of the light pulses impinges on the photodetector during any of the integration intervals. Generally, in order to yield the saturation value (cᵢ = cᵢ^{sat}) for at least one of the integration intervals for a given picture point of a given individual image, the intensity of the light pulse impinging on the photodetector corresponding to this picture point must be sufficiently high and the duration of the light pulse (pulse duration) during this integration interval (i.e. the overlap in time of the light pulse and the integration interval) must be sufficiently long to saturate the photodetector during the integration interval. It thus depends on the sensitivity of the sensor, on the lengths of the integration intervals for each picture point, on the intensity of the light pulses and on the duration of the light pulses emitted by a light source whether the picture points corresponding to the light source have gray values in the defined vicinity of one of the at least one predefined gray value.

As discussed in further detail below, the predefined gray values are defined by considering gray values for any combinations of saturation values and zero values of the charge levels at the end of the at least two integration intervals of an picture point. Typically, predefined gray values that correspond to at least one, but not all of the charge levels (at the end of the integration intervals) being saturation values are considered as particularly useful for detecting pulsing light sources as well as for discriminating these from non-pulsing light sources. The probability that the gray value of a picture point of a pulsing light source lies within the vicinity of such a predefined gray value can be easily estimated and depends on the time z needed to saturate the photodetector when constantly illuminated with light of an intensity corresponding to a light pulse. Typically, this time period z is shorter than the duration of each of the pulses and shorter than the shortest integration interval. In particular in this case, said probability can be calculated as max[0,min(Q, I) - W - z]/T, wherein T denotes the cycle duration of the pulsing light source, Q the time span between two subsequent light pulses (T-Q being the pulse duration of each light pulse), W the length of the shortest integration interval for that picture point, and I the length of the longest integration interval.

Moreover, an image rate of the sensor, i.e. the number of individual images per unit time (e.g. per second), may be less than a pulse rate of the light pulses, i.e. the number of light pulses per unit time (e.g. per second). Additionally or alternatively, the length of at least one, or of all, of said at least two integration intervals for any of the picture points for any of the individual images may be greater than a pulse duration of the light pulses. Additionally or alternatively, the length of the intervals between the light pulses may be greater than the shortest of the integration intervals or greater than each of the integration intervals for each of the picture points of each of the individual images. Under such circumstances, the probability of pixels points having gray values identical or close to the predefined gray values increases, thereby increasing the accuracy and reliability of recognizing a pulsing light source.

As indicated already, the method may comprise combining picture points to image regions. The image regions may, for example, be defined as (coherent) image regions of picture points that have gray values contained in any of the defined vicinities of the predefined gray values. If, in such embodiments, the sensor has a non-global read-out functionality, e.g. a line-by line (rolling shutter) or pixel-by-pixel read-out functionality, as generally known in the art, it may occur that the gray values of the picture points contained in such an image region of a given individual image jump between different of the defined vicinities from picture point to picture point or from one line of a picture point to another line of picture points (although corresponding to the same pulsing light source and, thus, belonging to the same image region). This may be due to phase shifts between the integration intervals (shifting with the read-out times of the picture points) and the emitted light pulses. It may be thus be envisaged to examine any of said image regions with respect to such local jumps of gray values between different defined vicinities (i.e. these local jumps are then considered as one of "the at least one predefined feature" indicative for a pulsing light source) and classify an image region as corresponding to a pulsing light source depending on the result of this examination.

One can envisage such image regions lying in close proximity to one another being combined into a total region which is classified as assigned to an individual light source. Such total regions have the great advantage that they are particularly stable with regard to their shape and their position within the individual images and are therefore particularly reliable to re-recognise and track over several individual images. This is particularly advantageous if one or more further features of the associated image regions are to be examined in consecutive individual images, as is described further below.

The examination of such features can then be carried out in each case also on the level of the total regions. This has the advantage of a greater stability of these features and thus leads to a greater reliability of the method. In this context, when one hereinafter speaks of an image region, this is always to also be understood as such a total region composed of adjacent image regions.

Further features with regard to which the image regions can be examined are described hereinafter. The reliability and the accuracy of the method can be increased further by way of adding one, several or all of these features as further necessary or sufficient conditions or as further indicators for a classification of an image region as a pulsing light source or as a part of a pulsing light source. In cases that a given feature is considered as a further necessary condition the wording "depending on whether" used below would be replaced by "if moreover", respectively.

In a further development of the method, one envisages the given image region being classified as a pulsing light source or as part of a pulsing light source, depending on whether a relative share of picture points of the given image region, whose gray values correspond exactly to at least one of the predefined gray values or lie in the defined vicinity of at least one of the predefined gray values, exceeds a predefined threshold value.

Moreover, one can envisage the given image region being classified as a pulsing light source or as part of a pulsing light source, depending on whether a variance of the gray values of the picture points of the given image region falls short of a predefined threshold value. Alternatively or additionally, one can examine as to whether a ratio which is formed by dividing a variance of the gray values of the picture points of the given image region by a variance of the gray values of all picture points of the given individual image, falls short of a predefined threshold value. These features which depend on the variance of the gray values of picture points may significantly increase the reliability of the proposed method and device for recognising pulsing light sources, in particular when some or all of the at least one predefined gray values are close to average gray values of the picture points measured, for example when a pulsing light source to be recognised is located in a bright environment. Said predefined threshold may be defined on the basis (e.g. proportional to the value of) the variance the gray values of picture points of an individual picture taken without illuminating the sensor (corresponding to the sensor specific background noise).

Moreover, it is possible for the given picture point or image region to be classified as a pulsing light source or as part of a pulsing light source, depending on whether the given picture point or image region is re-recognised again in individual images which in the sequence are subsequent to the given individual image. Such a re-recognition and tracking can be simplified by way of this, if several image regions lying in close proximity to one another, with gray values in the defined vicinity of at least one the predefined gray values, as described, can be combined into total regions.

The following features of image regions are each related exclusively to image regions which can be re-recognised (identified) and tracked, over several consecutive individual images (frames) of the (image) sequence.

In particular, one can envisage the given image region being classified as a pulsing light source or as part of a pulsing light source, depending on whether in the individual images following the individual image, an average value of the gray values of the picture points of the given image region changes by more than a defined threshold value. This is an indication of a brightness jump in this image region and is thus characteristic of a pulsing light source.

Moreover, one can envisage the given picture point or image region being classified as a pulsing light source or as part of a pulsing light source, depending on whether in the subsequent individual images, the gray values of the picture point or picture points of the given image region lie in the defined vicinity of at least one predefined gray value in a manner recurring with a periodicity, wherein the periodicity lies above a threshold vale. Specifically, it has been found that it is typical in particular for LED headlights, for temporally recurring brightness courses to occur in the assigned image regions. These temporal patterns in a non-trivial manner depend on the impulse frequency and the impulse duration of the LED(s) of the headlight, on the read-out frequency and on the illumination duration of the sensor, as well as on the a phase shift between the read-out and activation of the LED(S) of the headlight (or generally of the pulsing light source).

An evaluation of such a periodicity which is particularly simple and which can be carried out with relatively little effort and memory requirement can be achieved via the computation of the Hamming distance between a first vector and a second vector, wherein in a nth entry of the first vector, it is specified whether the gray values of the given image region in an individual image which precedes the given individual image in the sequence of individual images at the nth location (in the sequence thus exactly n-1 further individual images are located between this individual image and the given individual image) lie within the defined vicinity of at least one predefined gray value of the sensor or lie outside the defined vicinity of at least one gray value of the sensor. The second vector is formed from the first vector by way of a bitwise shifting of the first vector by p bits.

The computation of the Hamming distance is carried out repeatedly for different values of p, wherein finally that value of p, at which the Hamming distance is minimal, is determined as the period of the image region. Finally, the periodicity of the image region is computed from the Hamming distance belonging to this period, wherein generally a small Hamming distance means a large periodicity.

Moreover, the sensor may be of any of the types described above in connection with the proposed method. In particular, the sensor may be a CMOS sensor, in particular a high dynamic range (HDR) sensors, for example a multi-readout sensor, a split-pixels sensors, or a well-capacity-adjustment (WCA) sensor. For a better understanding, Two examples are described in more Detail.

For example, the sensor may be a CMOS sensor configured to automatically perform well capacity adjustments, as generally known in the art. These sensors have one or more adjustment values (reset levels) which may fixedly defined for the sensor. With an adequately large brightness jump in at least one picture point (pixel) or in response to illumination with high intensity, such a sensor automatically carries out an adjustment for the at least one photodetector corresponding to this picture point in order to adapts its sensitivity for this picture point to the brightness in this picture point (pixel). As a consequence, it may happen that the adjustment value or a value close to the adjustment value is assigned to a picture point as a gray value, whenever a brightness jump or intense illumination triggers (i.e. renders necessary) an adjustment of the sensor for this picture point. With each of these resets, the sensor thus may assign the same adjustment value or at least a gray value in the vicinity of this adjustment value, to the picture points of this region. In this manner, a picture point or image region may have recurring uniform gray values. In connection with the present invention, it has been observed that this may happen significantly often in the case of pulsing light sources, such as pulsing LED light sources. Thus, according to one embodiment of the present invention, a repetitive occurrence of picture points with gray values identical with (or close to) said adjustment values of CMOS sensor equipped with well capacity adjustment functionality may serve as an indicator or evidence of a pulsing light source.

Generally, the predefined gray values depend on the characteristic of the sensor used. The characteristic of a sensor may be represented by its characteristic curve, which is a diagram showing how the sensor converts illumination into gray values. The attributes that define the characteristic curve of the sensor may be adjustable, as it may be described in the specification of the sensor, as provided by the manufacturer, for example. Possible adjustable attributes comprise the saturation value, the integration times, the reset levels and/or the gray value function to calculate the gray values from the charge levels.

The predefined gray values may be identical to, for example, one or more of the adjustment values (reset levels) or may be defined using the gray value function (denoted as P below). As explained in more detail below, the gray value of each one of the picture points of any one of the individual images may be interpreted as the value of the gray-value function P(c₁, c₂, ...). The gray-value function is the formal relation between the two or more charge levels (c₁, c₂, ...) of the photodetector at the ends of the integration intervals for a given picture point and the resulting gray value of that picture point. For example, the predefined gray values may be defined by regarding any combination of saturation values and zero values of the charge levels (at the end of the integration intervals) as arguments of the gray value function. For example, the predefined gray values can be defined as the values of P(c₁, c₂, ...) with the values of the charge level cᵢ being either cᵢ⁰ or cᵢ^{sat} for all i = 1, 2, .... Typically, however, the special value P(c₁⁰, c₂⁰, ...), i.e. all charge levels being zero values, is left out, since this value corresponds to the darkest possible gray value (illumination below sensitivity of sensor). Also, in some applications the special value P(c₁^{sat}, c₂^{sat}, ...), i.e. all charge levels being saturation values, be left out or treated separately. This value corresponds to the lightest possible gray value and may be of special significance in some applications, e.g. for discriminating pulsing light source from non-pulsing light-sources.

It is also possible to determine the predefined gray values by performing a series of tests with a given sensor and using one or more pulsing light sources. By changing the repetition rate and the pulse duration, for example, said characteristic gray values may be observed and extracted from the corresponding picture points. For that purpose, preferably, the repetition rate of the light source is chosen greater than the image rate of the sensor, as described below. Typically, the number of characteristic gray values is less then 20, mostly less then 10 or even less then 5, depending on the given sensor type and characteristic curve. Typically, the number of predefined gray values equals the number of integration intervals for any given picture point of any given individual image.

For characteristic curves which consist of or comprise linear curve sections, e.g. defined as hₖ = mₖ x + bₖ with k = 1, 2, 3, ..., as it is the case e.g. for WCA sensors or multi-readout sensors, it is also possible to determine the predefined gray values on the basis of the sensor's characteristic curve alone. Typically, said characteristic gray values indicating pulsing light sources are the values in the intersection of each linear curve with vertical gray value axis, i.e. the value of bₖ, representing the theoretical gray value at the start of the integration interval.

In principle, the actual characteristic curve of a given individual sensor may deviate from a prespecified target characteristic curve within tolerance limits, this means, that the resulting predefined gray values of a given individual sensors may differ from those gray values which were intended with the actual sensor configuration chosen. Therefore, preferably, the predefined gray values are determined for each individual sensor, e.g. by performing a test series as described above or by measuring the actual characteristic curve of that sensor, preferably during or at the end of production. Preferably, however, the tolerance limits of the characteristic curves are narrow so that the variance of the predefined gray values of different individual sensors of a given type is small. As described above, in case of relatively large tolerance limits and/or high noise level of a given sensor type, the widths of the defined vicinities of the predefined gray values may be chosen large enough to reduce the probability false negative detections of pulsing light sources.

Alternatively, in particular if the sensor is equipped with a well capacity adjustment functionality, it may be envisaged that for each picture point of each of the individual images the at least two integration intervals for the picture point (immediately) follow each other (and do not overlap in contrast to the previous examples). In the case of well capacity adjustment, the charge level of the at least one photodetector corresponding to the picture point is reset to one of at least one predefined adjustment value of the sensor at the end of any one of the integration intervals for said picture point if the charge level of the at least one photodetector is beyond (due to strong illumination) the adjustment value at the end of said integration interval. Consequently, said adjustment value is the charge level of said photodetector at the beginning of the (immediately) following integration interval for said picture point of said individual image, i.e. the zero value of the following integration level set to said adjustment value. Typically, for the last of the at least two integration intervals no well capacity adjustment is provided, but only at the ends of the at least one integration interval preceding the last integration interval.

If for a given picture point no adjustments (resets to adjustment values) of the charge level has been performed, then the integration intervals for that picture point may be interpreted as one single continuous integration interval, the length of which being equal to the sum of the lengths of the at least two integration intervals. Furthermore, if for a given picture point one or more adjustments (resets to adjustment values) of the charge level have been performed, then the at least one integration interval following the latest adjustment may be interpreted as one single continuous integration interval, the length of which being equal to the sum of the lengths of said at least one integration interval following the latest adjustment. In terms of such a combined integration interval, the gray value for said picture point may by derived from the change of the charge level during this combined integration interval, typically by multiplying the (absolute) value of the change of the charge level with a weighting factor, which may be anti-proportional to the length of the combined integration interval.

Note that, depending on the definition of the charge level and on the configuration of the photodetector, the charge level may be (monotonously) decreasing with increasing amount of illumination incident on a photodetector during an integration interval. Then the charge level is reset to one of the at least one predefined adjustment value if the charge level has fallen below (i.e. is less than) the adjustment value at the end of said integration interval. If, however, the charge level is (monotonously) increasing with increasing amount of illumination incident on a photodetector during an integration interval, then the charge level is reset to one of the at least one predefined adjustment value if the charge level has risen above (i.e. is greater than) the adjustment value at the end of said integration interval.

The charge level of the at least one photodetector corresponding to the picture point is read out from the at least one photodetector corresponding to the picture point at the end of the last integration interval for said picture point of said individual image. For any picture point of any individual image the charge level read-out at end of last integration interval depends on whether any well capacity adjustments have been performed for the integration intervals for that picture point. In particular pulsing light sources emitting short but intense light pulse may trigger well capacity adjustments which increases the probability of gray values identical to or near the respective adjustment values, in particularly in dark environments.

Generally, the gray values of the picture points are determined on the basis of the charge levels read-out from the corresponding photodetectors, i.e. the read-out charge levels are typically processed and evaluated (digitally or analogously) to determine the respective gray values from the read-out charge levels. Accordingly, the at least one predefined gray value may generally be defined as one of at least one reset gray value of the sensor or as including the at least one predefined adjustment reset gray value of the sensor, wherein the at least one reset gray value, in turn, is defined as the gray value which is assigned to a picture point if one of the at least one predefined adjustment value of the sensor is read out from the at least one photodetector corresponding to that picture point at the end of the last integration interval for that picture point.

In case of WCA sensors, typically, the read-out circuitry of the sensor serves as an analogous calculator configured such that the charge levels read-out from the photodetectors are themselves interpretable as gray values and thus can be used as such. The at least one predefined gray value may therefore by defined as the at least one predefined adjustment value of the sensor or may include the at least one predefined adjustment value of the sensor.
The sensor may also comprise a processing circuitry or a processing unit configured to process the read-out charge levels and derive the gray values of the pictures point from the respective charge levels.

Typically, the sensor is configured such that for each of the picture points of each of the individual images, the gray value of the picture point corresponds to the charge level of the at least one photodetector corresponding to the picture point at the end of the longest of the at least two integration intervals for that picture point at the end of which the at least one photodetector is not saturated. In particular, this applies sensors with well capacity adjustment functionality and to sensors with multi-readout functionality, as described above.

In one embodiment, for each picture point of each of the individual images the charge levels are read out from the one or more photodetectors corresponding to the picture point at the ends of each of the integration intervals for said picture point. This may be accomplished, for example, if the sensor is equipped with a multi-readout functionality for each of the photodetectors of the sensors. In the case of the above mentioned one-to-many correspondence between picture points and photodetectors, for each picture point of each of the individual images, each of the photodetectors corresponding to the picture point is integrated only during one of the at least two integration intervals for the picture point (i.e. one integration interval per photodetector) and is read out at the end of the respective integration interval. Typically, when determining the gray values, the values of charge levels read out from the photodetectors are multiplied with a weighting factor. This weighting factor is typically anti-proportional to the length of the corresponding integration interval.

Finally, the device according to the invention for recognising light sources comprises a camera for detecting a sequence of individual images. This camera is of the type described above in connection with the proposed method. In particular it comprises a light-sensitive sensor for measuring gray values of picture points of the individual images as described. The device is configured to carry out all steps of the method proposed and described herein. Furthermore, the device may be configured to carry out all further optional steps of the proposed method as described herein. For that purpose the device comprises an evaluation unit of the type described. The device may also comprise read-out circuitry configured to read out the photodetectors in the way described in connection with the proposed method. The device may also comprise a memory configured to store the at least one predefined gray value.

The evaluation unit may thus be configured to combine at least a part of the picture points of the individual images, on account of their gray values, into image regions as described in connection with the proposed method. The evaluation unit is further configured to examine the picture points or the image regions with regard to the predefined features as described in connection with the proposed method.

Moreover, the sensor of the device may be of any of the types described above in connection with the proposed method. In particular, the sensor may be a CMOS sensor, in particular a high dynamic range (HDR) sensors, for example a multi-readout sensor, a split-pixels sensors, or a well-capacity-adjustment (WCA) sensor.

As with the method according to the invention, with this device too, one utilises the fact that a pulsing light source which is acquired with the camera and which beams an adequately greatly pulsing light power, may, for example, trigger adjustments in the image regions assigned to the light sources, in the sensor of the camera as described in connection with the proposed method. An image region, whose picture points have gray values in a defined vicinity of the predefined gray values, which may be defined as the adjustment values of the sensor, is characteristic of a light source whose brightness has very greatly changed in this time. This in particular represents a hint of an LED, since LED light sources are characterised by a particularly short response behaviour.

Thus pulsing light sources can be recognised in a particularly reliable manner with the device according to the invention.

Advantageous further developments of the device result due to the fact that the evaluation unit of the device is configured for carrying out a method of the type suggested here. The advantages already described above result depending on the embodiment of this method, and in particular an even further increased reliability in the recognition of pulsing light sources, in particular of LED headlights in a pulse operation.

Finally, a vehicle with a driver assistance system is suggested, which comprises a device of the type suggested here, and which in particular is configured to recognise headlights and/or rear lights of other vehicles, in particular pulsing light sources such as LED headlights and/or LED rear lights, wherein the camera of the device is preferably aligned in the direction of a front side of the vehicle.

The invention is hereinafter explained in more detail by way of various special embodiment examples, which are represented schematically in Figures 1 to 7. It shows:
- Figure 1: a schematic representation of a vehicle 1 with a driver assistance system which comprises a device of the type suggested,
- Figure 2: diagrammatic representation of the charge level of a photodetector of a multi-readout sensor, the charge level changing in response to illumination with a continuous light source,
- Figure 3: diagrammatic representation of the charge level of a photodetector of a multi-readout sensor, the charge level changing in response to illumination with a pulsing light source,
- Figure 4: diagrammatic representation of the charge level of a photodetector of a well capacity adjustment sensor, the charge level changing in response to illumination with a continuous light source,
- Figure 5: diagrammatic representation of the charge level of a photodetector of a well capacity adjustment sensor, the charge level changing in response to illumination with a pulsing light source,
- Figure 6: diagrammatic representation of the characteristic curve of a photodetector of a well capacity adjustment sensor for constant illumination; the characteristic function of which being continuously composed of sections of (affine) linear functions, the predefined gray values of the sensor corresponding to intersections of the (affine) linear functions with the gray value axis, and
- Figure 7: diagrammatic representation of gray values assumed by a particular picture point of the sensor, i.e. by one of the photodetectors, for a certain number of subsequent individual images.

Figure 1 shows a schematic representation of a vehicle 1 with a driver assistance system which comprises a device of the type suggested here, which is configured for carrying out a method of the type put forward here, for recognising, tracking and classifying light sources and pulsing light sources, such as in particular LED headlights.

This device comprises two cameras 2 which are aligned in the direction of the front side of the vehicle, for detecting a sequence of individual images of vehicles 4 which are in front or are oncoming. In other embodiments, the device may comprise only one such camera, or more than two cameras. These cameras in each case comprise a light-sensitive sensor 5 for measuring gray values of picture points of individual images. Moreover, the device comprises an evaluation unit 6 which is connected to the two cameras 5 which may be configured to combine at least a part of the picture points of the individual images of the two cameras 5, on account of their gray values, into coherent image regions of uniform gray values, to subsequently examine picture points and/or the image regions with regard to predefined features and to classify a given picture point or image region as a light source 7 or as a part of a light source 7 depending on whether these features are displayed.

The sensors are sensors generally known in the art, for example CMOS sensors with high dynamic HDR functionality, such as multi-readout sensors, split-pixel sensors, or well-capacity-adjustment (WCA) sensors.

Subsequently, all or some of the picture points and/or, if previously formed in the evaluation unit, all or some of said image regions are examined in the evaluation unit with regard to one or more predefined features. A given picture point or image region is classified as a (pulsing) light source or as part of a (pulsing) light source depending on whether it displays one, some or all of these features. For example, it may by envisaged that said picture point or region is classified as a (pulsing) light source or as part of a (pulsing) light source only if it displays some, one or all these features. Furthermore, it may by envisaged that one, some or all of said features are considered necessary for a picture point or region to be classified as a (pulsing) light source or as a part of a (pulsing) light source; one, some or all of said features may be considered sufficient for a picture point or a region to be classified as a (pulsing) light source or as part of a (pulsing) light source. It is also possible that one, some or all of said features are considered as an indicator or evidence that a picture point or region corresponds to a (pulsing) light source or to a part of a (pulsing) light source.

Some of the features may be defined, as some of the examples given below, on the level of regions of picture points and may be not applicable on the level of individual picture points.

It may be envisaged that said regions are formed only of those picture points which display one, some or all of the predefined features, such as any of the predefined features discussed below. It may further be envisaged, that these regions are then examined in the evaluation unit with regard to one or more (further) predefined features.

The gray values of the picture points of the individual images are measured by means of said photodetectors of the sensor. There may by a one-to-one correspondence between the picture points and the photodetectors or a one-to-many correspondence between the picture points and the photodetectors. In the first case, the gray value of any one of the picture points is determined from charge levels (which described below) of exactly one of the photodetectors. In the second case, the gray value of any one of the picture points is determined from charge levels of several of the photodetectors. The many-to-one correspondence may be accomplished be means of a micro-lens system, as generally known in the art as split-pixel design.

In order to measure the gray value of any of the picture points of any of the individual images, the one or more photodetectors corresponding to the picture point is illuminated during at least two (i.e. two or more) integration (time) intervals of that picture point of that individual image.

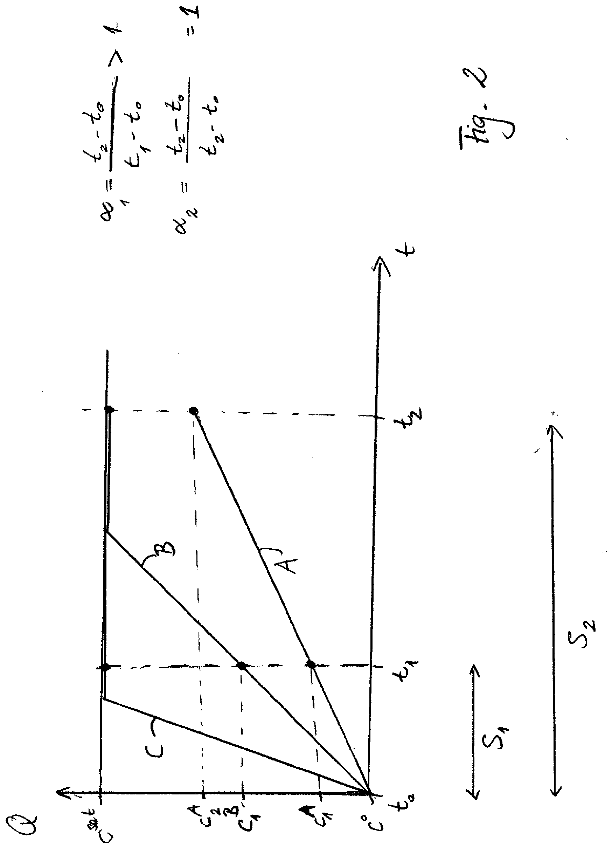

Further details about the sensors and the measurement of the gray values are presented along the discussion of Figures 2-5 below.

Generally, the charge level of any of the photodetectors of the sensor is indicative of the amount of illumination of the photodetector during any of the integration intervals. Thus the gray value of any picture point is derivable from the charge levels of the photodetectors. The value of the charge level of the photodetector at the beginning of any integration interval is denoted as zero value of the photodetector for that integration interval (denoted as cᵢ⁰, with i = 1, 2, ... being the index of the integration interval considered), i.e. the integration of the photodetector starts at the respective zero value of the charge level of the photodetector. Thus, the value of the charge level at the end of any of the integration intervals being identical (or very close to) the corresponding zero value indicates that the photodetector was not illuminated during the integration interval (or that the illumination was below a minimum amount of illumination detectable by the photodetector). Furthermore, a saturation value (denoted as cᵢ^{sat}, i = 1, 2, ...) of the charge level at the end of any of the integration intervals indicates the respective photodetector saturated during the integration interval.

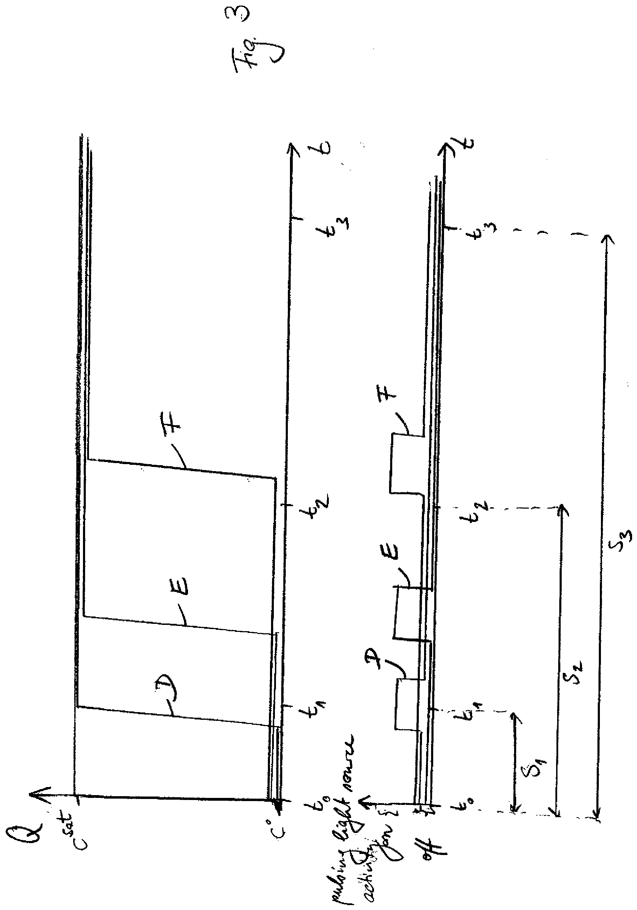

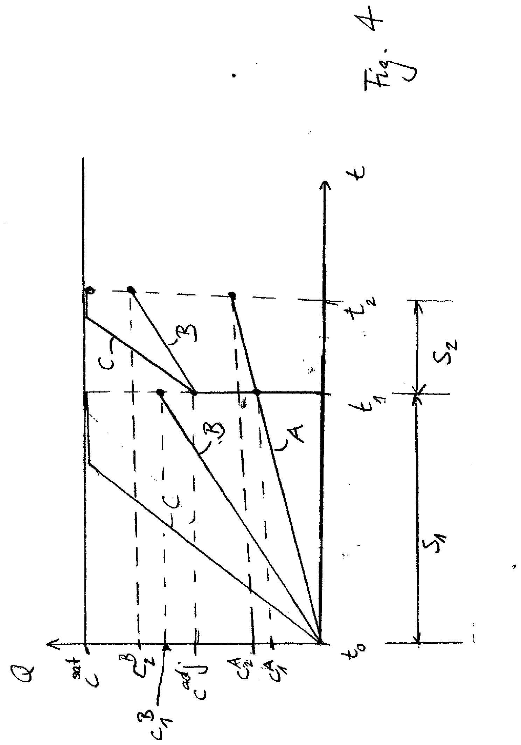

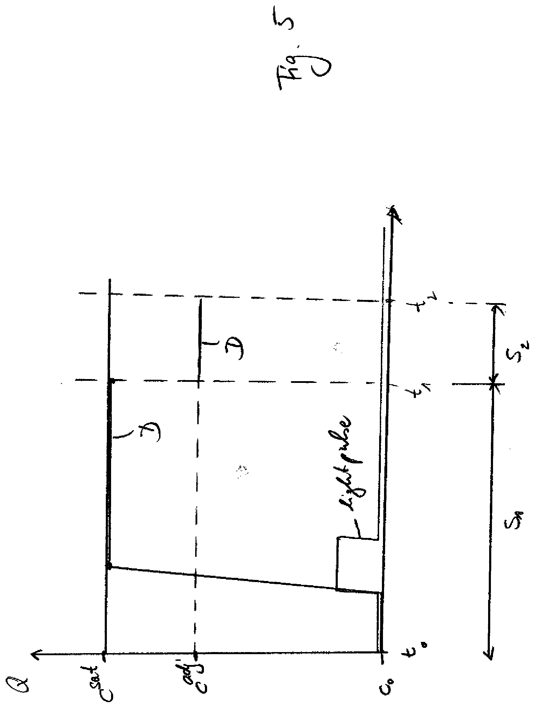

As explained in greater detail with respect to Figures 2-5, it is a general requirement of the present invention that for each individual image and for each of the picture points of the individual image, the gray value of the picture point depends on two or more charge levels (denoted as cᵢ, i = 1, 2, ...) of the at least one photodetector corresponding to the picture point, wherein the at least two charge levels are the charge levels at the respective ends (denoted as tᵢ, i = 1, 2, ...) of at least two integration intervals (i = 1, 2...) for the picture point. The at least two integration intervals for said picture point have different lengths and thus correspond to different sensitivities of the respective photodetector. The at least two integration intervals for any given picture point of any given individual image may follow each other, see Figures 2 and 3, or overlap, see Figures 4 and 5.

The examination with regard to the at least one predefined feature comprises an examination of the picture points as to whether the picture points have gray values in a defined vicinity of one of at least one predefined gray value. In case that the picture points are grouped in image regions the examination with regard to the at least one predefined feature may comprise an examination of the image regions as to whether the picture points of these image regions comprise gray values in a defined vicinity of one of at least one predefined gray value.

The at least one predefined gray value is generally defined as the gray value that any (or each) of the picture points attains (or would have) if the charge levels of the at least one photodetector corresponding to the picture point at the ends of the at least two integration intervals for the picture point have (or had) either the corresponding zero value or the corresponding saturation value, see Figures 2-5.

The predefined gray values may be stored in a memory and read out from the memory by the evaluation unit. It is also possible that the predefined gray values are calculated by the evaluation unit. Typically, the predefined gray values are the same for all picture points of any given individual image. Furthermore, the predefined gray values may be the same for all individual images; the predefined gray values may also change over time, for example depending on a current work mode of the sensor.

It may be envisaged that the image regions are formed only from picture points having gray values in a defined vicinity of one of at least one predefined gray value.

The given picture point or image region may then be classified as a pulsing light source or as part of a pulsing light source depending on the result of this examination. For example, the given picture point or image region may be classified as a pulsing light source or as part of a pulsing light source if the result of this examination is positive. A positive result of this examination may also be interpreted as an indicator or evidence for the given picture point or image region being a pulsing light source or a part of a pulsing light source.

In the following, various characteristics and configurations of sensors suitable for the use with the present invention, for instance as sensor 5 of the embodiment shown in Figure 1, are discussed.

The sensor used with the present invention may be a HDR CMOS sensor with multi-readout functionality or with well capacity adjustment functionality, for example. Figure 2 shows a diagrammatic representation of the charge level of one individual photodetector of a specific embodiment of a sensor with multi-readout functionality. In this example, the charge level changes during the two integration intervals S₁ and S₂ due to illumination with light of constant intensity emitted by a non-pulsing light source; shown are three scenarios A, B, C with three different light intensities. Figure 3 shows a diagrammatic representation of the charge level of a photodetector of a sensor of the same type as it changes during the three integration intervals S₁, S₂ and S₃ due to illumination with light pulses emitted by a pulsing light source; shown are three scenarios D, E, and F with three different pulse rates.

In both cases, the integration interval S1 begins at time t0 and ends at time t1, whereas the integration interval S2 begins at time t0 and ends at time t2 (and integration interval S3 beginning at time t0 and ending at time t3); integration interval S1 being shorter than integration interval S2 (which in turn is shorter than S3). The charges levels of the photodetector are read out by means of a read-out circuitry at times t1 and t2 (and t3) and may be transmitted to the evaluation unit 6. In alternative configurations, the integration intervals of any of the picture points of any of the individual images start subsequently (at different start times, for example t₁^{a} < t₂^{a} < ..., i denoting the index of the integration intervals) and end synchronously at the same end time (at the same end time t₁ = t₂ = ..., i denoting the index of the integration intervals).

Hence, with this sensor embodiment, for each picture point of each of the individual images the charge levels are read out from the one or more photodetectors corresponding to the picture point at the ends of each of the integration intervals for said picture point. In the case of the above mentioned one-to-many correspondence between picture points and photodetectors, such as for the split-pixels design, for each picture point of each of the individual images, each of the photodetectors corresponding to the picture point is integrated only during one of the at least two integration intervals for the picture point (i.e. one integration interval per photodetector) and is read out at the end of the respective integration interval.

It is understood that the sensor works periodically, i.e., for each individual image the gray values of all picture points of the individual image are measured. In particular, for any of the picture points the at least two integration intervals (i = 1, 2...) are repeated for each individual image. Furthermore, the charge levels of the photodetectors may be reset (to said zero values) at or before the beginning of the first integration interval for each picture point of each of the individual images.

Only for the sake of convention and without loss of generality, it is assumed in Figures 2 and 3 (as for the embodiments corresponding to Figures 4 and 5) that the charge level monotonously increases with the amount of illumination incident on a photodetector during the integration intervals. In principle, it could also be assumed, that the charge level monotonously decreases with the amount of illumination incident on a photodetector during an integration interval. For example, the photodetector may comprise a photosensitive element, such as a photodiode, and a capacitor which is electrically charged at a predefined potential difference (voltage) at the beginning of any one of the integration intervals. The capacitor may be an integral part of the photodiode. Depending on the intensity of light incident on the photosensitive element during the integration interval, it allows the potential difference of the capacitor to change during the integration interval. Typically, the configuration of the photodetector is such that the potential difference of the capacitor decreases during illumination of the photosensitive element during an integration interval due to the flow of a photocurrent through the photodiode. In principle, however, the configuration of the photodetector may also be such that the potential difference of the capacitor increases during illumination of the photosensitive during an integration interval.

In the example according to Figures 2 to 5, the charge level Q of the photodetector is defined as Q = c^{sat} - c^{capacity}, for example, wherein c^{capacity} is defined as the amount of charge stored in the capacitor. At t0, the capacitor of the photodetector is charged with an amount of charge equal to c^{sat}, so that Q = 0. Alternatively, the potential difference of the capacitor, the amount of electrical energy stored in the capacitor, or any function of one or more of these quantities may also serve for defining the charge level. In this case the charge level representing the saturation value may be different for any of the integration intervals.

As can be seen from Figures 2 and 3 the photodetector saturates when the charge level reaches a saturation value cᵢ^{sat} (i = 1, 2, ... denoting the integration interval). At this point, any continued illumination during the integration interval does not change the charge level any further.

In general, the gray value (P) of each of the picture points of any of the individual images may be interpreted as the value of a gray-value function P, the value of the gray-value function depending on the two or more charge levels P = P(c₁, c₂, ...).

For example, P may be defined such that for each of the picture points of each of the individual images, the gray value of the picture point corresponds to the charge level of the photodetector corresponding to the picture point at the end of the longest of the at least two integration intervals for that picture point at the end of which the at least one photodetector is not saturated. For example, the gray value function may also prescribe to multiply the value of this charge level with a weighting factor αᵢ anti-proportional to the length of the corresponding integration interval. In the example shown in Figure 2, this would mean that in scenario A, the gray value would be P = α₂ c₂^{A}; in scenario B the gray value would be P = α₁ c₁^{B}; in scenario C the gray value would be P = α₁ c^{sat}. In the example shown in Figure 3, in scenario D, the gray value would be P = α₁ c^{sat}; in scenario E the gray value would be P = α₂ c^{sat}; in scenario F the gray value would be P = α₃ c^{sat}.

If the gray value function P is defined as the sum of all read-out charge levels, each weighted with the corresponding weighting factor α₁, this would mean that in scenario A, the gray value would be P = α₁ c₁^{A} + α₂ c₂^{A}; in scenario B the gray value would be P = α₁ c₁^{B} + α₂ c^{sat}; in scenario C the gray value would be P = α₂ c^{sat} + α₁ c^{sat}. In the example shown in Figure 3, in scenario D, the gray value would be P = α₁ c^{sat} + α₂ c^{sat} + α₃ c^{sat}; in scenario E the gray value would be P = α₁ c₁⁰ + α₂ c^{sat} + α₃ c^{sat}; in scenario F the gray value would be P = α₁ c₁⁰ + α₂ c₂⁰ + α₃ c^{sat}. One observes, that in scenarios D, E, F, the gray values depend only from the values of c₁⁰ and c^{sat}.

The predefined gray values are therefore defined as the values of P(c₁, c₂, ...) with the values of the charge level cᵢ being either cᵢ⁰ or cᵢ^{sat} for all i = 1, 2, .... Note that in the present case, as in most cases, the value cᵢ^{sat} is independent of i, i.e., the same for all integration intervals. Furthermore, as in most cases with integration intervals beginning synchronously, the value cᵢ⁰ is independent of i, i.e., the same for all integration intervals.

As seen from Figures 2 and 3 (and from Figures 4 and 5) the sensitivity of the photodetectors of the sensor (equivalently: the intensity of the light pulses) is such that if any one of the photodetectors is illuminated with one of the light pulses during one of the integration intervals, the photodetector saturates during the illumination with the light pulse and the charge level of the photodetector at the end of the respective integration interval has the corresponding saturation value, i.e., cᵢ = cᵢ^{sat} with i being the index of the integration interval.

Moreover, the sensitivity of the photodetectors (or equivalently, the brightness of the environment of the pulsing light source) is such that the charge level of each photodetector of the sensor located in an area of the sensor associated with the pulsing light source does not change during any of said integration intervals of the photodetector if said photodetector is not illuminated by any of the light pulses during the integration interval and the charge level of the photodetector at the end of the integration interval has the corresponding zero value, i.e., cᵢ = cᵢ⁰ with i being the index of the integration interval.

Moreover, in these examples an image rate of the sensor, i.e. the number of individual images per unit time (e.g. per second), is less than a pulse rate of the light pulses, i.e. the number of light pulses per unit time (e.g. per second). Additionally, the length of at least one, or of all, of said at least two integration intervals for any of the picture points may be greater than a pulse duration of the light pulses. Under such circumstances, the probability of pixels points having gray values identical or close to the predefined gray values increases, thereby increasing the accuracy and reliability of recognizing a pulsing light source.

Figure 4 shows a diagrammatic representation of the charge level of one individual photodetector of a specific embodiment of a sensor with well capacity adjustment functionality. In this example, analogously to Figure 2, the charge level changes during the two integration intervals S₁ and S₂ due to illumination with light of constant intensity emitted by a non-pulsing light source; shown are three scenarios A, B, C with three different light intensities. Figure 5 shows a diagrammatic representation of the charge level of a photodetector of a sensor of the same type as it changes during the two integration intervals S₁ and S₂ due to illumination with light pulses emitted by a pulsing light source; shown is one scenario D.

In both cases, the integration interval S1 begins at time t0 and ends at time t1, whereas the integration interval S2 begins at time t1 and ends at time t2; integration interval S1 being longer than integration interval S2. The charge levels of the photodetector are read out by means of a read-out circuitry at t2, i.e. the charge level is read out from the photodetector at the end of the last integration interval by a read-out circuitry of the sensor and may be further processed by a processing unit of the sensor which is configured to determine the gray values depending on the read-out charge levels. The gray values may then be transmitted to the evaluation unit 6.

As it is the case in scenarios B and C shown in Figure 4 and in scenario D shown in Figure 5, the charge level of the photodetector is reset to a predefined adjustment value c_{adj} of the sensor at the end of integration interval S1, since the charge level of photodetector is greater than (due to the illumination with the intense light pulse) the adjustment value c_{adj} at the end of said integration interval. In other words, the capacity is recharged with an amount of charge equal to c_{adj} at the resets. Consequently, the adjustment value is the charge level of said photodetector at the beginning of the (immediately) following integration interval S2, i.e. the zero value of the following integration level set to said adjustment value,c₂⁰ = c_{adj}.

As can be clearly seen in Figures 4 and 5, the charge level read-out at t2 depends on whether a well capacity adjustment has been performed. Pulsing light sources emitting short and intense light pulse may trigger well capacity adjustments and thereby strongly increase the probability of gray values identical to or near the respective adjustment values, in particularly under the conditions described above.

The (at least one) predefined gray value may therefore by defined as the at least one predefined adjustment value of the sensor or may include the at least one predefined adjustment value of the sensor.

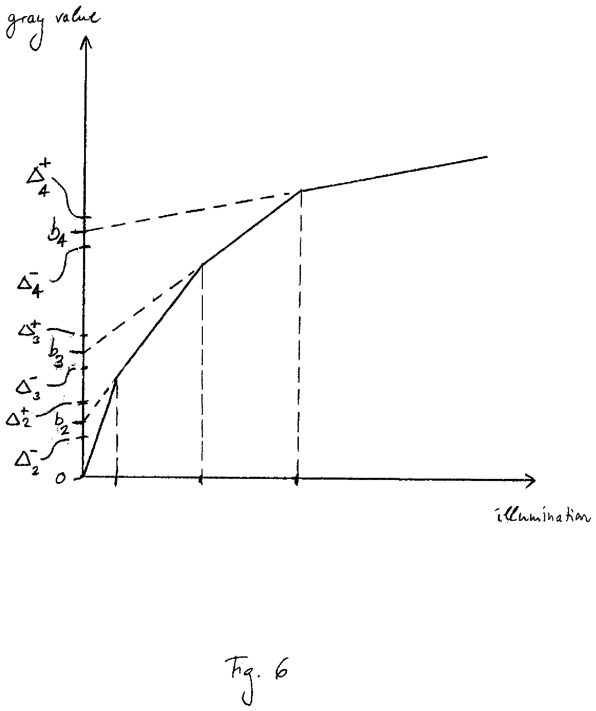

As for the specific example shown in Figure 6, the predefined gray values generally depend on the characteristic curve C(x) of the sensor used and, for instance may be determined on the basis of the characteristic curve alone. Figure 6 shows a diagrammatic representation of the characteristic curve of a photodetector of an example of a well capacity adjustment (WCA) sensor being illuminated with a light source emitting light of constant intensity. In this example, the characteristic curve C(x) is a piecewise defined continuous function of the illumination (x) of the photodetector, wherein the illumination x may generally be defined as the product of light intensity and illumination time. The characteristic curve C(x) may generally be composed of sections of (affine) linear functions hₖ = mₖ x + bₖ. In the specific example represented by in figure 6, index k has the values 1, 2, 3, and 4. The predefined gray values of the sensor correspond to the intersections of the (affine) linear functions with the (vertical) gray value axis, i.e. with the value of parameter bₖ. The value of parameter bₖ may be interpreted as the theoretical gray value of a picture point at the start of one of the integration intervals for one picture point, wherein in the specific example shown 0 = b₁ < b₂ < b₃ < b₄. Since b₁ = 0 (corresponding to the darkest possible gray value), only the values of b₂, b₃, and b₄ are used as predefined gray values in this example. The defined vicinities are separated intervals of gray values, written as [Δ⁻ₖ, Δ⁺ₖ] for k = 2, 3, and 4, with Δ⁻ₖ < bₖ < Δ⁺ₖ, such that each of the defined vicinities contains exactly one of the predefined gray values.

Returning to Figure 1, the sensors 5 may be, for example, in each case CMOS sensors of the types described above. Each sensor may have a gray value depth of 12 bits, wherein one of the predefined gray values may correspond in each case, for example, to a gray value of 345. The defined vicinity of the adjustment value may lie between gray values of 334 and 369. The vicinity of the predefined gray value (corresponding to the adjustment value) may, for example, be defined with a width of about 10% of the adjustment value or therebelow. The adjustment value may lie roughly centrally in this vicinity. Particular ways of how the vicinity can be defined have been described above in the general part of the description.

The examination with regard to predefined features may also include an examination of the image regions as to whether the picture points of these image regions have gray values in said vicinity of the adjustment value of the sensor, and wherein the evaluation unit is moreover configured to classify the given image region as a pulsing light source or as a part of a pulsing light source, in the case of a positive result of this examination.

Thereby, the device is configured to recognise headlights and/or rear lights of other vehicles, in particular pulsing light sources 7 such as LED headlights and LED rear lights. For this purpose, the cameras 5 are aligned in the direction of the front side 3 of the vehicle 1.

Moreover, image regions which lie in close proximity to one another may be combined by the evaluation unit into a total region which is then classified as being assigned to an individual light source 7.

Moreover, with the device, for further increasing the reliability of the recognition, tracking and classification of light sources, the image regions to be examined, as well as the total regions formed from the image regions to be examined may be examined with regard to all subsequent features, and an image region or total region which is examined in this manner may be classified as a pulsing light source or as part of a pulsing light source if it displays one, some or all the features mentioned here. Hereinafter, one speaks merely of image regions to be examined. What is meant each time is also the total regions formed from image regions to be tested (see above).

Belonging to these features to be examined may be that a relative share of picture points of the given image region (to be examined), whose gray values correspond precisely to the adjustment value of the sensor, exceeds a predefined threshold value, that a variance of the gray values of the picture points of the given image region falls short of a defined threshold value, and/or that a ratio which is formed by dividing a variance of the gray values of the picture points of the given image region by a variance of the gray values of all picture points of the given individual image, falls short of a defined threshold value.

Further features which may be examined by the device are whether the given image region is re-recognised in individual images which in the sequence are subsequent to the given individual image and/or whether in the individual images subsequent to the individual image, an average value of the gray values of the picture points of the given image region changes by more than a defined threshold value.

A further feature that may be examined is whether in the following individual images, the gray values of the picture points of the image region to be examined lie in a defined vicinity of the adjustment value of the sensor in a manner recurring with a periodicity, wherein the periodicity must lie above a threshold value.

Thereby, the periodicity may be determined via the computation of the Hamming distance between a first vector and a second vector, wherein in an nth entry of the first vector, it is specified as to whether the gray values of the given image region in an individual image which precedes the given individual image in the sequence of the individual images at the nth location (thus in the sequence, precisely n-1 further individual images are located between this individual image and the given individual image), lie within the defined vicinity of the adjustment value of the sensor or outside the defined vicinity of the adjustment value of the sensor. The second vector is formed from the first vector by way of a bitwise shifting of the first vector by p bits.

Thereby, the computation of the Hamming distance may be carried out in a repeated manner for different values of p, wherein finally that value of p, at which the Hamming distance is minimal, is determined as the period of the image region. Finally, the periodicity of the image region is computed from the Hamming distance belonging to this period, wherein generally a smaller Hamming distance means a greater periodicity.

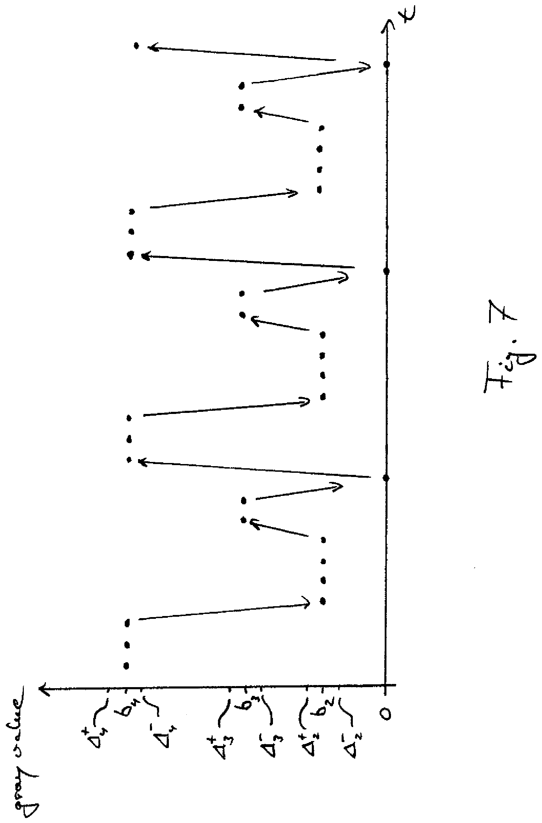

Figure 7 shows a diagram with the gray values assumed by a particular picture point of the sensor 5, i.e. by one of the photodetectors, for a certain number of subsequent individual images, each point in the diagram representing the gray value assumed by the respective picture point for one of the individual images. Alternatively, the diagram can be understood as showing the gray values assumed by several picture points for one of the individual images, these picture points belonging to one column of the sensor 5 and lying in a particular image region, wherein the sensor 5 or the camera 2 is assumed to have a non global or rolling shutter such that the different picture points are illuminated at different times. This particular picture point or the particular image region corresponds to a pulsing light source 7, i.e. at least a part of the pulsing light source 7 is imaged or projected onto this picture point or picture points by a lens of the camera 2. This diagram shows how the gray values assumed by this picture point or picture points jump between the predefined gray values 0, b₁, b₂, b₃, and b₄ or, more precisely, between the different defined vicinities of these predefined gray values. This is a typical behaviour as the pulses of the light source 7 may fall in different integration intervals of the respective photodetector. This is why, in a particular embodiment, the method for recognising a pulsing light source 7 comprises examining whether the picture points having gray values within said defined vicinities assume, in subsequent individual images or in adjacent photodetector positions within an image region of one individual image, gray values lying in different of the defined vicinities, such that the gray values of these picture points jump between the defined vicinities of different predefined gray values. In this case, the picture points are identified as corresponding to a pulsing light source 7 depending on whether they show such jumps or not. In this embodiment, the evaluation unit 6 of the device is configured to do, in addition to the steps explained above, this examination on jumps between the different vicinities.

## Claims

1. A method for recognising a pulsing light source (7), in which a sequence of one or more individual images is acquired with a camera (2), and gray values of picture points of the individual images are measured with a light sensitive sensor (5) of the camera (2), wherein the sensor (5) comprises an array of photodetectors, wherein further, in an evaluation unit (6), all or at least some of the picture points of each individual image, on account of their gray values, are examined with regard to at least one predefined feature, wherein a given picture point is classified as a pulsing light source (7) or as a part of a pulsing light source (7) depending on whether it displays the at least one predefined feature,
wherein for each of the picture points of each of the individual images the gray value of the picture point depends on two or more charge levels (cᵢ, i = 1, 2, ...) of at least one of the photodetectors corresponding to the picture point at the ends of at least two integration intervals (i = 1, 2...),
wherein the charge level of any of the photodetectors at the end of any of the respective integration intervals is indicative of the amount of illumination incident on the photodetector during the integration interval, a zero value (cᵢ⁰) of the charge level at the end of any of the integration intervals indicating no illumination during the integration interval and a saturation value (cᵢ^{sat}) of the charge level at the end of any of the integration intervals indicating saturation of the photodetector during the integration interval,
**characterised in that**
the at least two integration intervals have different lengths, wherein the gray value of the picture point is defined as the sum of the two or more charge levels each weighted with a corresponding weighting factor or corresponds to the charge level of the photodetector at the end of the longest of the at least two integration intervals for which the at least one photodetector is not saturated, wherein the examination with regard to the at least one predefined feature comprises an examination of the picture points as to whether the picture points have gray values in a defined vicinity of a predefined gray value or of one of at least two predefined gray values, the at least one predefined gray value being defined as the gray value that any of the picture points attains if the charge levels of the at least one photodetector corresponding to the picture point have, at the ends of the at least two integration intervals (i = 1, 2...), either the corresponding zero value (cᵢ⁰) or the corresponding saturation value (cᵢ^{sat}), wherein at least one of the predefined gray values is defined as the gray value any of the picture points attains if at least one of the charge levels of the at least one photodetector corresponding to the picture point has, at the end of the respective integration interval (i), the corresponding zero value (cᵢ⁰) and at least one further of the charge levels of the at least one photodetector corresponding to the picture point has, at the end of the respective integration interval (j ≠ i), the corresponding saturation value (cⱼ^{sat}).

2. A method according to claim 1, **characterised in that** the predefined gray values comprise at least two predefined gray values, wherein the defined vicinities of the at least two predefined gray values do not overlap with each other.

3. A method according to claim 2, **characterised in that** each one of the defined vicinities of the at least two predefined gray values is defined as an interval of the form [Δ⁻ₖ, Δ⁺ₖ], wherein k = 1, 2, ... is the index of the vicinity considered, and wherein Δ⁻ₖ, Δ⁺ₖ are gray values at the endpoints of the interval considered which fulfill Δ⁻ₖ < Δ⁺ₖ.

4. A method according to claim 3, **characterized in that** it comprises examining whether the picture points having gray values within said defined vicinities assume, in subsequent individual images, gray values lying in different of the defined vicinities, such that the gray values of these picture points jump between the defined vicinities of different predefined gray values, and identifying the picture points as corresponding to a pulsing light source (7) depending on whether they show such jumps or not.

5. A method according to any of the preceding claims, **characterised in that** for each picture point of each of the individual images the charge levels are read out from the one or more photodetectors corresponding to the picture point at the ends of each of the integration intervals for said picture point.

6. A method according to any of the preceding claims, **characterised in that** for each picture point of each of the individual images the at least two integration intervals for the picture point follow each other, wherein the charge level of the at least one photodetector corresponding to the picture point is reset to one of at least one predefined adjustment value of the sensor (5) at the end of one of the integration intervals for said picture point, if the charge level of the at least one photodetector has passed the adjustment value at the end of said integration interval, such that said adjustment value is the charge level of said photodetector at the beginning of the following integration interval for said picture point of said individual image, wherein the charge level of the at least one photodetector corresponding to the picture point is read out from the at least one photodetector corresponding to the picture point at the end of the last integration interval for said picture point of said individual image.

7. A method according to claim 6, **characterised in that** the at least one predefined gray value is defined as the at least one predefined adjustment value of the sensor (5).

8. A method according to any of the preceding claims, **characterised in that** the picture points are, depending on their gray values, combined into image regions, an image region being identified as corresponding to a pulsing light source (7) if all picture points of this image region or a significant portion of the picture points of this image region have gray values contained in at least one or any of the defined vicinities.

9. A device for recognising a pulsing light source (7), comprising a camera (2) for acquiring a sequence of one or more individual images, wherein the camera (2) comprises a light-sensitive sensor (5) with an array of photodetectors for measuring gray values of picture points of the individual images, and an evaluation unit (6) which is configured to examine all or at least some of the picture points of each individual image, on account of their gray values, are examined with regard to at least one predefined feature, wherein a given picture point is classified as a pulsing light source (7) or as a part of a pulsing light source (7) depending on whether it displays the at least one predefined feature,
wherein for each of the picture points of each of the individual images the gray value of the picture point depends on two or more charge levels (cᵢ, i = 1, 2, ...) of at least one of the photodetectors corresponding to the picture point at the ends of at least two integration intervals (i = 1, 2...),
wherein the charge level of any of the photodetectors at the end of any of the integration intervals is indicative of the amount of illumination incident on the photodetector during the respective integration interval, a zero value (cᵢ⁰) of the charge level at the at the end of any of the integration intervals indicating no illumination during the integration interval and a saturation value (cᵢ^{sat}) of the charge level at the end of any of the integration intervals indicating saturation of the photodetector during the integration interval,
**characterised in that**
the at least two integration intervals have different lengths, wherein the gray value of the picture point is defined as the sum of the two or more charge levels each weighted with a corresponding weighting factor or corresponds to the charge level of the photodetector at the end of the longest of the at least two integration intervals for which the at least one photodetector is not saturated, wherein the examination with regard to the at least one predefined feature comprises an examination of the picture points as to whether the picture points have gray values in a defined vicinity of a predefined gray value or of one of at least two predefined gray values, wherein the at least one predefined gray value is defined as the gray value that any of the picture points attains if the charge levels of the at least one photodetector corresponding to this picture point have, at the end of each of the at least two integration intervals (i = 1, 2...), either the corresponding zero value (cᵢ⁰) or the corresponding saturation value (cᵢ^{sat}), wherein at least one of the predefined gray values is defined as the gray value any of the picture points attains if at least one of the charge levels of the at least one photodetector corresponding to the picture point has, at the end of the respective integration interval (i), the corresponding zero value (cᵢ⁰) and at least one further of the charge levels of the at least one photodetector corresponding to the picture point has, at the end of the respective integration interval (j ≠ i), the corresponding saturation value (cⱼ^{sat}).

10. A device according to claim 9, **characterised in that** the sensor (5) is configured such that for each picture point of each of the individual images the at least two integration intervals for the picture point follow each other, wherein the sensor (5) is configured to reset the charge level of the at least one photodetector corresponding to the picture point to one of at least one predefined adjustment value of the sensor (5) at the end of one of the integration intervals for said picture point if the charge level of the at least one photodetector has passed the adjustment value at the end of said integration interval such that said adjustment value is the charge level of said photodetector at the beginning of the following integration interval for said picture point of said individual image, wherein the sensor (5) further comprises a read-out circuitry configured to read the charge level of the at least one photodetector corresponding to said picture point out from said at least one photodetector at the end of the last integration interval for said picture point.

11. A device according to any of the claims 9 or 10, **characterised in that** the at least one predefined gray value is defined as the at least one predefined adjustment value of the sensor (5).

12. A vehicle (10) with a driver assistance system which comprises a device according to any of the claims 9 to 11 and which is configured to recognise headlights and/or rear lights of other vehicles (4), in particular pulsing light sources (7), such as LED headlights and/or LED rear lights, wherein the camera (2) of the device is preferably aligned in the direction of a front side (3) of the vehicle (1).

## Patentansprüche

1. Verfahren zum Erkennen einer pulsierenden Lichtquelle (7), in der eine Sequenz aus einem oder mehr individuellen Bildern mit einer Kamera (2) erworben wird, und Grauwerte von Bildpunkten der individuellen Bilder mit einem lichtempfindlichen Sensor (5) der Kamera (2) gemessen werden, wobei der Sensor (5) eine Anordnung von Fotodetektoren aufweist, wobei weiterhin in einer Bewertungseinheit (6) alle oder zumindest einige der Bildpunkte jedes individuellen Bilds wegen ihrer Grauwerte im Hinblick auf zumindest ein vordefiniertes Merkmal geprüft werden, wobei ein gegebener Bildpunkt als eine pulsierende Lichtquelle (7) oder als ein Teil einer pulsierenden Lichtquelle (7) in Abhängigkeit davon, ob er das zumindest eine vordefinierte Merkmal anzeigt, klassifiziert wird,
wobei für jeden der Bildpunkte jedes der individuellen Bilder der Grauwert des Bildpunkts von zwei oder mehr Ladungspegeln (cᵢ, i = 1, 2, ...) von zumindest einem der Fotodetektoren entsprechend dem Bildpunkt an den Enden von zumindest zwei Integrationsintervallen (i = 1, 2 ...) abhängt,
wobei der Ladungspegel von jedem der Fotodetektoren an dem Ende von jedem der jeweiligen Integrationsintervalle den Betrag der auf den Fotodetektor während des Integrationsintervalls auftreffenden Beleuchtung anzeigt, ein Nullwert (cᵢ⁰) des Ladungspegels an dem Ende jedes der Integrationsintervalle keine Beleuchtung während des Integrationsintervalls anzeigt und ein Sättigungswert (cᵢ^{sat}) des Ladungspegels an dem Ende jedes der Integrationsintervalle eine Sättigung des Fotodetektors während des Integrationsintervalls anzeigt,
**dadurch gekennzeichnet, dass**
die zumindest zwei Integrationsintervalle unterschiedliche Längen haben, wobei der Grauwert des Bildpunkts definiert ist als die Summe der zwei oder mehr Ladungspegel, die jeweils mit einem entsprechenden Wichtungsfaktor gewichtet werden, oder dem Ladungspegel des Fotodetektors an dem Ende des längsten der zumindest zwei Integrationsintervalle, für das der zumindest eine Fotodetektor nicht gesättigt ist, entspricht, wobei die Prüfung im Hinblick auf das zumindest eine vordefinierte Merkmal eine Prüfung der Bildpunkte dahingehend, ob die Bildpunkte Grauwerte in einer definierten Nähe eines vordefinierten Grauwerts oder eines von zumindest zwei vordefinierten Grauwerten haben, aufweist, wobei der zumindest eine vordefinierte Grauwert als der Grauwert definiert wird, den jeder der Bildpunkte erzielt, wenn die Ladungspegel des zumindest einen Fotodetektors entsprechend dem Bildpunkt an den Enden der zumindest zwei Integrationsintervalle (i = 1, 2 ...) haben, entweder den entsprechenden Nullwert (cᵢ⁰) oder den entsprechenden Sättigungswert (cᵢ^{sat}), wobei zumindest einer der vordefinierten Grauwerte definiert ist als der Grauwert, den jeder der Bildpunkte erzielt, wenn zumindest einer der Ladungspegel des zumindest einen Fotodetektors entsprechend dem Bildpunkt an dem Ende des jeweiligen Integrationsintervalls (i) den entsprechenden Nullwert (cᵢ⁰) hat und zumindest ein weiterer der Ladungspegel des zumindest einen Fotodetektors entsprechend dem Bildpunkt an dem Ende des jeweiligen Integrationsintervalls (j ≠ i) den entsprechenden Sättigungswert (cⱼ^{sat}) hat.

2. Verfahren nach Anspruch 1, **dadurch gekennzeichnet, dass** die vordefinierten Grauwerte zumindest zwei vordefinierte Grauwerte aufweisen, wobei die definierten Nähen der zumindest zwei vordefinierten Grauwerte einander nicht überlappen.

3. Verfahren nach Anspruch 2, **dadurch gekennzeichnet, dass** eine der definierten Nähen der zumindest zwei vordefinierten Grauwerte als ein Intervall der Form [Δ⁻ₖ, Δ⁺ₖ] definiert ist, wobei k = 1, 2, ... der Index der betrachteten Nähe ist, und wobei Δ⁻ₖ, Δ⁺ₖ Grauwerte an den Endpunkten des betrachteten Intervalls sind, die Δ⁻ₖ < Δ⁺ₖ erfüllen.

4. Verfahren nach Anspruch 3, **dadurch gekennzeichnet, dass** es die Prüfung, ob die Bildpunkte mit Grauwerten innerhalb der definierten Nähen in aufeinanderfolgenden individuellen Bildern Grauwerte annehmen, die in unterschiedlichen der definierten Nähen liegen, derart, dass die Grauwerte dieser Bildpunkte zwischen den definierten Nähen von unterschiedlichen vordefinierten Grauwerten springen, und das Identifizieren der Bildpunkte als einer Impulslichtquelle (7) entsprechend in Abhängigkeit davon, ob sie derartige Sprünge zeigen oder nicht, aufweist.

5. Verfahren nach einem der vorhergehenden Ansprüche, **dadurch gekennzeichnet, dass** für jeden Bildpunkt jedes der individuellen Bilder die Ladungspegel von dem einen oder den mehreren Fotodetektoren entsprechend dem Bildpunkt an den Enden von jedem der Integrationsintervalle für diesen Bildpunkt ausgelesen werden.

6. Verfahren nach einem der vorhergehenden Ansprüche, **dadurch gekennzeichnet, dass** für jeden Bildpunkt jedes der individuellen Bilder die zumindest zwei Integrationsintervalle für den Bildpunkt einander folgen, wobei der Ladungspegel des zumindest einen Fotodetektors entsprechend dem Bildpunkt auf einen von zumindest einem vordefinierten Einstellwert des Sensors (5) an dem Ende eines der Integrationsintervalle für diesen Bildpunkt zurückgesetzt wird, wenn der Ladungspegel des zumindest einen Fotodetektors den Einstellwert an dem Ende des Integrationsintervalls passiert hat, derart, dass der Einstellwert der Ladungspegel des Fotodetektors am Anfang des folgenden Integrationsintervalls für diesen Bildpunkt dieses individuellen Bilds ist, wobei der Ladungspegel des zumindest einen Fotodetektors entsprechend dem Bildpunkt aus dem zumindest einen Fotodetektor entsprechend dem Bildpunkt an dem Ende des letzten Integrationsintervalls für diesen Bildpunkt dieses individuellen Bilds ausgelesen wird.

7. Verfahren nach Anspruch 6, **dadurch gekennzeichnet, dass** der zumindest eine vordefinierte Grauwert als der zumindest eine vordefinierte Einstellwert des Sensors (5) definiert wird.

8. Verfahren nach einem der vorhergehenden Ansprüche, **dadurch gekennzeichnet, dass** die Bildpunkte abhängig von ihren Grauwerten in Bildbereiche kombiniert werden, wobei ein Bildbereich als entsprechend einer pulsierenden Lichtquelle (7) identifiziert wird, wenn alle Bildpunkte dieses Bildbereichs oder ein signifikanter Teil der Bildpunkte dieses Bildbereichs Grauwerte haben, die in zumindest einer oder jeder der definierten Nähen enthalten sind.

9. Vorrichtung zum Erkennen einer pulsierenden Lichtquelle (7), aufweisend eine Kamera (2) zum Erwerben einer Sequenz aus einem oder mehreren individuellen Bildern, wobei die Kamera (2) einen lichtempfindlichen Sensor (5) mit einer Anordnung von Fotodetektoren zum Messen von Grauwerten von Bildpunkten der individuellen Bilder aufweist, und eine Bewertungseinheit (6), die konfiguriert ist zum Prüfen aller oder zumindest einiger der Bildpunkte jedes individuellen Bilds wegen ihrer Grauwerte im Hinblick auf zumindest ein vordefiniertes Merkmal, wobei ein gegebener Bildpunkt als eine pulsierende Lichtquelle (7) oder als ein Teil einer pulsierenden Lichtquelle (7) in Abhängigkeit davon, ob er das zumindest eine vordefinierte Merkmal anzeigt, klassifiziert wird, wobei für jeden der Bildpunkte jedes der individuellen Bilder der Grauwert des Bildpunkts von zwei oder mehr Ladungspegeln (cᵢ, i = 1, 2, ...) von zumindest einem der Fotodetektoren entsprechend dem Bildpunkt an den Enden von zumindest zwei Integrationsintervallen (i = 1, 2 ...) abhängt,
wobei der Ladungspegel von jedem der Fotodetektoren an dem Ende von jedem der Integrationsintervalle die Intensität der auf den Fotodetektor während des jeweiligen Integrationsintervalls auftreffenden Beleuchtung anzeigt, einen Nullwert (cᵢ⁰) des Ladungspegels an dem Ende jedes der Integrationsintervalle, der keine Beleuchtung während des Integrationsintervalls anzeigt, und einen Sättigungswert (cᵢ^{sat}) des Ladungspegels an dem Ende jedes der Integrationsintervalle, der eine Sättigung des Fotodetektors während des Integrationsintervalls anzeigt,
**dadurch gekennzeichnet, dass**
die zumindest zwei Integrationsintervalle unterschiedliche Längen haben, wobei der Grauwert des Bildpunkts definiert ist als die Summe der zwei oder mehr Ladungspegel, die jeweils mit einem entsprechenden Wichtungsfaktor gewichtet sind, oder dem Ladungspegel des Fotodetektors an dem Ende des längsten der zumindest zwei Integrationsintervalle, für das der zumindest eine Fotodetektor nicht gesättigt ist, entspricht, wobei die Prüfung im Hinblick auf das zumindest eine vordefinierte Merkmal eine Prüfung der Bildpunkte dahingehend, ob die Bildpunkte Grauwerte in einer definierten Nähe eines vordefinierten Grauwerts oder von einem von zumindest zwei vordefinierten Grauwerten haben, aufweist, wobei der zumindest eine vordefinierte Grauwert als der Grauwert definiert ist, den jeder der Bildpunkte erzielt, wenn die Ladungspegel des zumindest einen Fotodetektors entsprechend diesem Bildpunkt an dem Ende jedes der zumindest zwei Integrationsintervalle (i = 1, 2 ...) entweder den entsprechenden Nullwert (cᵢ⁰) oder den entsprechenden Sättigungswert (cᵢ^{sat}) haben, wobei zumindest einer der vordefinierten Grauwerte definiert ist als der Grauwert, den jeder der Bildpunkte erzielt, wenn zumindest einer der Ladungspegel des zumindest einen Fotodetektors entsprechend dem Bildpunkt an dem Ende des jeweiligen Integrationsintervalls (i) den entsprechenden Nullwert (cᵢ⁰) hat, und zumindest ein weiterer der Ladungspegel des zumindest einen Fotodetektors entsprechend dem Bildpunkt an dem Ende des jeweiligen Integrationsintervalls (j ≠ i) den entsprechenden Sättigungswert (cⱼ^{sat}) hat.

10. Vorrichtung nach Anspruch 9, **dadurch gekennzeichnet, dass** der Sensor (5) derart konfiguriert ist, dass für jeden Bildpunkt jedes der individuellen Bilder die zumindest zwei Integrationsintervalle für den Bildpunkt einander folgen, wobei der Sensor (5) konfiguriert ist zum Zurücksetzen des Ladungspegels des zumindest einen Fotodetektors entsprechend dem Bildpunkt auf einen von zumindest einem vordefinierten Einstellwert des Sensors (5) an dem Ende von einem der Integrationsintervalle für den Bildpunkt, wenn der Ladungspegel des zumindest einen Fotodetektors den Einstellwert an dem Ende des Integrationsintervalls passiert hat, derart, dass dieser Einstellwert der Ladungspegel des Fotodetektors an dem Anfang des folgenden Integrationsintervalls für diesen Bildpunkt dieses individuellen Bilds ist, wobei der Sensor (5) weiterhin eine Ausleseschaltung aufweist, die konfiguriert ist zum Lesen des Ladungspegels des zumindest einen Fotodetektors entsprechend dem Bildpunkt aus dem zumindest einen Fotodetektor an dem Ende des letzten Integrationsintervalls für diesen Bildpunkt.

11. Vorrichtung nach einem der Ansprüche 9 oder 10, **dadurch gekennzeichnet, dass** der zumindest eine vordefinierte Grauwert als der zumindest eine vordefinierte Einstellwert des Sensors (5) definiert ist.

12. Fahrzeug (10) mit einem Fahrerunterstützungssystem, das eine Vorrichtung nach einem der Ansprüche 9 bis 11 aufweist und das konfiguriert ist zum Erkennen von Scheinwerferlicht und/oder Rücklicht von anderen Fahrzeugen (4), insbesondere von pulsierenden Lichtquellen (7), wie LED-Scheinwerfern und/oder LED-Rücklichtern, wobei die Kamera (2) der Vorrichtung vorzugsweise in der Richtung einer Vorderseite (3) des Fahrzeugs (1) ausgerichtet ist.

## Revendications

1. Procédé pour reconnaître une source de lumière à impulsions (7), dans lequel une séquence d'une ou de plusieurs image(s) individuelle(s) est acquise à l'aide d'une caméra (2), et des valeurs de gris de points d'image des images individuelles sont mesurées à l'aide d'un capteur sensible à la lumière (5) de la caméra (2), dans lequel le capteur (5) comprend un réseau de photodétecteurs, dans lequel, en outre, dans une unité d'évaluation (6), tous les points d'image ou au moins certains des points d'image de chaque image individuelle, en ce qui concerne leurs valeurs de gris, sont examinés eu égard à au moins une caractéristique prédéfinie, dans lequel un point d'image donné est classifié en tant que source de lumière à impulsions (7) ou en tant que partie d'une source de lumière à impulsions (7) en fonction de si oui ou non il affiche l'au moins une caractéristique prédéfinie; dans lequel:
pour chacun des points d'image de chacune des images individuelles, la valeur de gris du point d'image dépend de deux niveaux de charge ou plus (cᵢ, i = 1, 2, ...) d'au moins l'un des photodétecteurs qui correspond au point d'image au niveau des extrémités d'au moins deux intervalles d'intégration (i = 1, 2, ...); dans lequel:
le niveau de charge de l'un quelconque des photodétecteurs au niveau de l'extrémité de l'un quelconque des intervalles d'intégration respectifs est indicatif de la quantité d'éclairage qui arrive en incidence sur le photodétecteur pendant l'intervalle d'intégration, une valeur de zéro (cᵢ⁰) du niveau de charge au niveau de l'extrémité de l'un quelconque des intervalles d'intégration indiquant une absence d'éclairage pendant l'intervalle d'intégration et une valeur de saturation (cᵢ^{sat}) du niveau de charge au niveau de l'extrémité de l'un quelconque des intervalles d'intégration indiquant une saturation du photodétecteur pendant l'intervalle d'intégration;
**caractérisé en ce que**:
les au moins deux intervalles d'intégration présentent des longueurs différentes, dans lequel la valeur de gris du point d'image est définie en tant que somme des deux niveaux de charge ou plus dont chacun est pondéré à l'aide d'un facteur de pondération correspondant ou correspond au niveau de charge du photodétecteur au niveau de l'extrémité de l'intervalle d'intégration le plus long des au moins deux intervalles d'intégration pour lequel l'au moins un photodétecteur n'est pas saturé, dans lequel l'examen eu égard à l'au moins une caractéristique prédéfinie comprend un examen des points d'image en ce qui concerne si oui ou non les points d'image présentent des valeurs de gris dans un voisinage défini d'une valeur de gris prédéfinie ou d'une valeur de gris d'au moins deux valeurs de gris prédéfinies, l'au moins une valeur de gris prédéfinie étant définie en tant que valeur de gris que l'un quelconque des points d'image atteint si les niveaux de charge de l'au moins un photodétecteur qui correspond au point d'image présentent, au niveau des extrémités des au moins deux intervalles d'intégration (i = 1, 2, ...), soit la valeur de zéro correspondante (cᵢ⁰), soit la valeur de saturation correspondante (cᵢ^{sat}), dans lequel au moins l'une des valeurs de gris prédéfinies est définie en tant que valeur de gris que l'un quelconque des points d'image atteint si au moins l'un des niveaux de charge de l'au moins un photodétecteur qui correspond au point d'image présente, au niveau de l'extrémité de l'intervalle d'intégration respectif (i), la valeur de zéro correspondante (cᵢ⁰) et si au moins un autre des niveaux de charge de l'au moins un photodétecteur qui correspond au point d'image présente, au niveau de l'extrémité de l'intervalle d'intégration respectif (j ≠ i), la valeur de saturation correspondante (cᵢ^{sat}).

2. Procédé selon la revendication 1, **caractérisé en ce que** les valeurs de gris prédéfinies comprennent au moins deux valeurs de gris prédéfinies, dans lequel les voisinages définis des au moins deux valeurs de gris prédéfinies ne se chevauchent pas l'un l'autre ou les uns les autres.

3. Procédé selon la revendication 2, **caractérisé en ce que** chacun des voisinages définis des au moins deux valeurs de gris prédéfinies est défini en tant qu'intervalle de la forme [Δₖ⁻, Δₖ⁺], dans lequel k = 1, 2, ... est l'indice du voisinage considéré, et dans lequel Δₖ⁻, Δₖ⁺ sont des valeurs de gris au niveau des points d'extrémité de l'intervalle considéré qui satisfont Δk⁻ < Δₖ⁺.

4. Procédé selon la revendication 3, **caractérisé en ce qu'**il comprend l'examen de si oui ou non les points d'image qui présentent des valeurs de gris qui sont à l'intérieur desdits voisinages définis prennent, dans des images individuelles subséquentes, des valeurs de gris qui se situent dans des voisinages différents des voisinages définis, de telle sorte que les valeurs de gris de ces points d'image effectuent un saut entre les voisinages définis de différentes valeurs de gris prédéfinies, et l'identification des points d'image en tant que points d'image qui correspondent à une source de lumière à impulsions (7) en fonction de si oui ou non ils présentent de tels sauts.

5. Procédé selon l'une quelconque des revendications qui précèdent, **caractérisé en ce que**, pour chaque point d'image de chacune des images individuelles, les niveaux de charge sont lus à partir d'un photodétecteur ou de plusieurs photodétecteurs qui correspond/correspondent au point d'image au niveau des extrémités de chacun des intervalles d'intégration pour ledit point d'image.

6. Procédé selon l'une quelconque des revendications qui précèdent, **caractérisé en ce que**, pour chaque point d'image de chacune des images individuelles, les au moins deux intervalles d'intégration pour le point d'image se suivent l'un l'autre ou les uns les autres, dans lequel le niveau de charge de l'au moins un photodétecteur qui correspond au point d'image est réinitialisé à une valeur de réglage prédéfinie d'au moins une valeur de réglage prédéfinie du capteur (5) au niveau de l'extrémité d'un d'intervalle d'intégration des intervalles d'intégration pour ledit point d'image, si le niveau de charge de l'au moins un photodétecteur a dépassé la valeur de réglage au niveau de l'extrémité dudit intervalle d'intégration, de telle sorte que ladite valeur de réglage prédéfinie soit le niveau de charge dudit photodétecteur au niveau du début de l'intervalle d'intégration qui suit pour ledit point d'image de ladite image individuelle, dans lequel le niveau de charge de l'au moins un photodétecteur qui correspond au point d'image est lu à partir de l'au moins un photodétecteur qui correspond au point d'image au niveau de l'extrémité du dernier intervalle d'intégration pour ledit point d'image de ladite image individuelle.

7. Procédé selon la revendication 6, **caractérisé en ce que** l'au moins une valeur de gris prédéfinie est définie en tant que l'au moins une valeur de réglage prédéfinie du capteur (5).

8. Procédé selon l'une quelconque des revendications qui précèdent, **caractérisé en ce que** les points d'image sont, en fonction de leurs valeurs de gris, combinés selon des régions d'image, une région d'image étant identifiée en tant que région qui correspond à une source de lumière à impulsions (7) si tous les points d'image de cette région d'image ou les points d'image d'une partie significative des points d'image de cette région d'image présentent des valeurs de gris qui sont contenues dans au moins un voisinage défini des voisinages définis ou dans de quelconques voisinages définis des voisinages définis.

9. Dispositif pour reconnaître une source de lumière à impulsions (7), comprenant une caméra (2) pour acquérir une séquence d'une ou de plusieurs image(s) individuelle(s), dans lequel la caméra (2) comprend un capteur (5) qui est muni d'un réseau de photodétecteurs pour mesurer des valeurs de gris de points d'image des images individuelles, et une unité d'évaluation (6) qui est configurée de manière à ce qu'elle examine tous les points d'image ou au moins certains des points d'image de chaque image individuelle, en ce qui concerne leurs valeurs de gris, eu égard à au moins une caractéristique prédéfinie, dans lequel un point d'image donné est classifié en tant que source de lumière à impulsions (7) ou en tant que partie d'une source de lumière à impulsions (7) en fonction de si oui ou non il affiche l'au moins une caractéristique prédéfinie; dans lequel:
pour chacun des points d'image de chacune des images individuelles, la valeur de gris du point d'image dépend de deux niveaux de charge ou plus (cᵢ, i = 1, 2, ...) d'au moins l'un des photodétecteurs qui correspond au point d'image au niveau des extrémités d'au moins deux intervalles d'intégration (i = 1, 2, ...); dans lequel:
le niveau de charge de l'un quelconque des photodétecteurs au niveau de l'extrémité de l'un quelconque des intervalles d'intégration est indicatif de la quantité d'éclairage qui arrive en incidence sur le photodétecteur pendant l'intervalle d'intégration respectif, une valeur de zéro (cᵢ⁰) du niveau de charge au niveau de l'extrémité de l'un quelconque des intervalles d'intégration indiquant une absence d'éclairage pendant l'intervalle d'intégration et une valeur de saturation (cᵢ^{sat}) du niveau de charge au niveau de l'extrémité de l'un quelconque des intervalles d'intégration indiquant une saturation du photodétecteur pendant l'intervalle d'intégration;
**caractérisé en ce que**:
les au moins deux intervalles d'intégration présentent des longueurs différentes, dans lequel la valeur de gris du point d'image est définie en tant que somme des deux niveaux de charge ou plus dont chacun est pondéré à l'aide d'un facteur de pondération correspondant ou correspond au niveau de charge du photodétecteur au niveau de l'extrémité de l'intervalle d'intégration le plus long des au moins deux intervalles d'intégration pour lequel l'au moins un photodétecteur n'est pas saturé, dans lequel l'examen eu égard à l'au moins une caractéristique prédéfinie comprend un examen des points d'image en ce qui concerne si oui ou non les points d'image présentent des valeurs de gris dans un voisinage défini d'une valeur de gris prédéfinie ou d'une valeur de gris prédéfinie d'au moins deux valeurs de gris prédéfinies, dans lequel l'au moins une valeur de gris prédéfinie est définie en tant que valeur de gris que l'un quelconque des points d'image atteint si les niveaux de charge de l'au moins un photodétecteur qui correspond à ce point d'image présentent, au niveau de l'extrémité de chacun des au moins deux intervalles d'intégration (i = 1, 2, ...), soit la valeur de zéro correspondante (cᵢ⁰), soit la valeur de saturation correspondante (cᵢ^{sat}), dans lequel au moins l'une des valeurs de gris prédéfinies est définie en tant que valeur de gris que l'un quelconque des points d'image atteint si au moins l'un des niveaux de charge de l'au moins un photodétecteur qui correspond au point d'image présente, au niveau de l'extrémité de l'intervalle d'intégration respectif (i), la valeur de zéro correspondante (cᵢ⁰) et si au moins un autre des niveaux de charge de l'au moins un photodétecteur qui correspond au point d'image présente, au niveau de l'extrémité de l'intervalle d'intégration respectif (j ≠ i), la valeur de saturation correspondante (cⱼ^{sat}).

10. Dispositif selon la revendication 9, **caractérisé en ce que** le capteur (5) est configuré de telle sorte que pour chaque point d'image de chacune des images individuelles, les au moins deux intervalles d'intégration pour le point d'image se suivent l'un l'autre ou les uns les autres, dans lequel le capteur (5) est configuré de manière à ce qu'il réinitialise le niveau de charge de l'au moins un photodétecteur qui correspond au point d'image à une valeur de réglage prédéfinie d'au moins une valeur de réglage prédéfinie du capteur (5) au niveau de l'extrémité de l'un des intervalles d'intégration pour ledit point d'image si le niveau de charge de l'au moins un photodétecteur a dépassé la valeur de réglage au niveau de l'extrémité dudit intervalle d'intégration de telle sorte que ladite valeur de réglage soit le niveau de charge dudit photodétecteur au niveau du début de l'intervalle d'intégration qui suit pour ledit point d'image de ladite image individuelle, dans lequel le capteur (5) comprend en outre un circuit de lecture qui est configuré de manière à ce qu'il lise le niveau de charge de l'au moins un photodétecteur qui correspond audit point d'image à partir dudit au moins un photodétecteur au niveau de l'extrémité du dernier intervalle d'intégration pour ledit point d'image.

11. Dispositif selon l'une quelconque des revendications 9 ou 10, **caractérisé en ce que** l'au moins une valeur de gris prédéfinie est définie en tant que l'au moins une valeur de réglage prédéfinie du capteur (5).

12. Véhicule (10) muni d'un système d'aide à la conduite, lequel comprend un dispositif selon l'une quelconque des revendications 9 à 11 et lequel est configuré de manière à ce qu'il reconnaisse des feux avant et/ou des feux arrière d'autres véhicules (4), en particulier des sources de lumière à impulsions (7), telles que des feux avant à LED et/ou des feux arrière à LED, dans lequel la caméra (2) du dispositif est de préférence alignée dans la direction d'un côté avant (3) du véhicule (1).
